Europäisches Patentamt

European Patent Office

Office européen des brevets

(19)

(11) **EP 1 495 790 A1**

(12) **EUROPEAN PATENT APPLICATION**
published in accordance with Art. 158(3) EPC

(43) Date of publication:
   **12.01.2005 Bulletin 2005/02**

(51) Int Cl.⁷: **B01D 39/20**, B01D 46/00, F01N 3/02

(21) Application number: **03745979.9**

(22) Date of filing: **09.04.2003**

(86) International application number:
   **PCT/JP2003/004478**

(87) International publication number:
   **WO 2003/084640 (16.10.2003 Gazette 2003/42)**

(84) Designated Contracting States:
   **AT BE BG CH CY CZ DE DK EE ES FI FR GB GR HU IE IT LI LU MC NL PT RO SE SI SK TR**

(30) Priority: **09.04.2002 JP 2002106777**

(71) Applicant: **IBIDEN CO., LTD.**
   **Ogaki-shi, Gifu 503-8004 (JP)**

(72) Inventor: **YAMADA, Keiji**
   **Ibiden co. ltd. Ogakikita Kojo**
   **Ibi-gun, Gifu 501-0695 (JP)**

(74) Representative: **Hart Davis, Jason et al**
   **Cabinet Beau de Loménie,**
   **158, rue de l'Université**
   **75340 Paris Cedex 07 (FR)**

(54) **HONEYCOMB FILTER FOR CLARIFICATION OF EXHAUST GAS**

(57)    An obj ect of the present invention is to provide a honeycomb filter for purifying exhaust gases which has superior durability and is less likely to generate cracks and the like at a crisscross portion between sealing material layer, even when used together with a catalyst or used in an exhaust gas purifying device repeatedly for a long time.

The present invention is directed to a honeycomb filter for purifying exhaust gases which has a structure in which:

a plurality of rectangular columnar porous ceramic members are combined with one another through a sealing material layer to constitute a ceramic block, each of the rectangular columnar porous ceramic member including a number of through holes that are placed in parallel with one another in the length direction with partition wall interposed therebetween;
a sealing material layer is also formed on a circumference portion of the ceramic block; and
said partition wall which separates the through holes functions as a filter for collecting particulates,

wherein, on a cross section perpendicular to the length direction of the porous ceramic member of the ceramic block, the maximum width L (mm) of the crisscross portion of said sealing material layer is 1.5 to 3 times greater than the minimum width 1 (mm) of the sealing material layer.

Fig. 1

**Description**

CROSS REFERENCE TO RELATED APPLICATION

This application claims benefit of priority to Japanese Patent Application No. 2002-106777, filed on April 9, 2002, the contents of which are incorporated by reference herein.

TECHNICAL FIELD

The present invention relates to a honeycomb filter for purifying exhaust gases that is used as a filter for removing particulates and the like contained in exhaust gases discharged from an internal combustion engine such as a diesel engine or the like.

BACKGROUND ART

In recent years, particulates, contained in exhaust gases discharged from internal combustion engines of vehicles such as buses, trucks and the like and construction machines, have raised serious problems as these particulates are harmful to the environment and the human body.

For this reason, there have been proposed various ceramic filters that allow exhaust gases to pass through porous ceramics and to collect particulates in the exhaust gases, thereby purifying the exhaust gases.

With respect to the ceramic filter of this type, conventionally, for example, there has been proposed a honeycomb filter which has a structure in which a plurality of columnar porous ceramic members, each of which is made of silicon carbide and has a number of through holes placed in parallel with one another in the length direction with partition wall interposed therebetween, are combined with one another through sealing material layer (for example, see JP Kokai 2001-96117 and JP Kokai 2001-190916).

Honeycomb filters having the above-mentioned structure are superior in heat resistance and provide easy regenerating processes, so that they are used in various large-size vehicles and vehicles with diesel engines.

When the above-mentioned honeycomb filter is installed in an exhaust gas passage in an internal combustion engine, particulates in exhaust gases that have been discharged from the internal combustion engine are captured by the partition wall upon passing through the honeycomb filter, so that the exhaust gases are purified. Here, as such an exhaust gas purifying process progresses, particulates are gradually accumulated on the partition wall that separates the through holes of the honeycomb filter to cause clogging and the subsequent interruption in gas permeability; therefore, the above-mentioned ceramic filter needs to be subjected to a regenerating process regularly by burning and removing the particulates that cause the clogging by the use of a heating means such as a heater or the like.

However, when the exhaust gas purifying process is carried out for a long time by using such a conventional honeycomb filter, the sealing material layer, formed between the porous ceramic members, is likely to suffer from wind erosion by exhaust gases at the end face of the honeycomb filter on the exhaust gas inlet side. In particular, on the end face of the honeycomb filter on the exhaust gas inlet side, a crisscross portion, which is a portion at which sealing material layer formed between the porous ceramic members intersect with each other, is likely to suffer from concentrated wind erosion due to exhaust gases, with the result that a big depression is sometimes formed at this crisscross portion.

When a honeycomb filter in which the sealing material layer has been subjected to wind erosion with the result that a big depression is formed at the crisscross portion of the sealing material layer is used to carry out an exhaust gas purifying process, a large amount of particulates tend to accumulate on the big depression of the crisscross portion of the sealing material layer.

In the case where the honeycomb filter in such a state is subjected to a regenerating process, since the particulates accumulated in the depression are burned to cause a great thermal stress on the sealing material layer locally, serious defects such as cracks and the like occur in the sealing material layer, causing destruction of the honeycomb filter in some cases.

Moreover, JPKokai 2001-206780 has discloseda rectangular columnar ceramic structural body which is constituted by rectangular columnar ceramic sintered segments that have been integrally formed into one, with the widths of the sealing material layer between the segments being set not to a constant value, but to different values unevenly.

Nevertheless, the application of this rectangular columnar ceramic structural body fails to sufficiently prevent wind erosion at the crisscross portion of the sealing material layer and, in the case where a catalyst or a catalyst supporting film is applied thereto, the sealing property and adhesive property of the sealing material layer tends to become insufficient.

## SUMMARY OF THE INVENTION

The present invention has been made to solve the above-mentioned problems, and its object is to provide a honeycomb filter for purifying exhaust gases which has superior durability and is less likely to generate cracks and the like at a crisscross portion of sealing material layer, even when used together with a catalyst or used in an exhaust gas purifying device repeatedly for a long time.

The present invention provides a honeycomb filter for purifying exhaust gases which has a structure in which:

a plurality of rectangular columnar porous ceramic members are combined with one another through a sealing material layer to constitute a ceramic block, each of the rectangular columnar porous ceramic member comprising a number of through holes that are placed in parallel with one another in the length direction with partition wall interposed therebetween;
a sealing material layer is also formed on a circumference portion of the above-mentioned ceramic block; and
the above-mentioned partition wall which separates the above-mentioned through holes functions as a filter for collecting particulates,

wherein, on a cross section perpendicular to the length direction of the above-mentioned porous ceramic member of the ceramic block, the maximum width L (mm) of the crisscross portion of the above-mentioned sealing material layer is 1.5 to 3 times greater than the minimum width l (mm) of the above-mentioned sealing material layer.

Here, in the honeycomb filter for purifying exhaust gases of the present invention, the expression "on a cross section perpendicular to the length direction of the porous ceramic member of the ceramic block, the maximum width L (mm) of the crisscross portion of the sealing material layer is 1.5 to 3 times greater than the minimum width l (mm) of the sealingmaterial layer" means that when values of the maximum width L at crisscross portions of the respective sealing material layer are averaged, the average value is 1.5 to 3 times greater than the minimum width l of the sealing material layer. In this case, it is desirable to make the maximum width L 1.5 to 3 times greater than the minimum width l of the sealing material layer at all the crisscross portions of the sealing material layer.

In the honeycomb filter for purifying exhaust gases of the present invention, desirably, the outer circumferential face in the length direction has a curved face.

Desirably, a catalyst, a catalyst supporting film is applied to the honeycomb filter for purifying exhaust gases of the present invention. In the honeycomb filter for purifying exhaust gases of the present invention, the catalyst may be applied to the porous ceramic member or may be applied to the sealing material layer. In the same manner, in the honeycomb filter for purifying exhaust gases of the present invention, the catalyst supporting filmmay be applied to the porous ceramic member or may be applied to the sealing material layer.

## BRIEF DESCRIPTION OF THE DRAWINGS

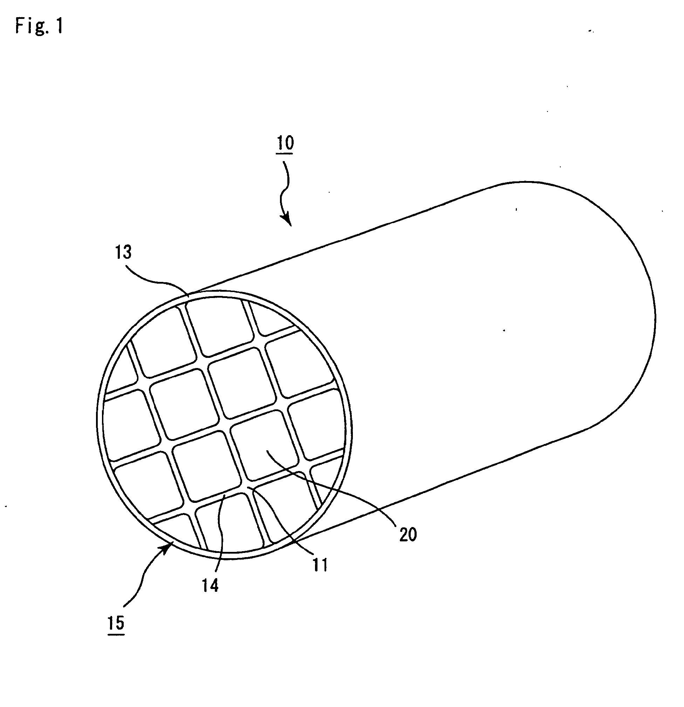

Fig. 1 is a perspective view that schematically shows one example of a honeycomb filter for purifying exhaust gases of the present invention.

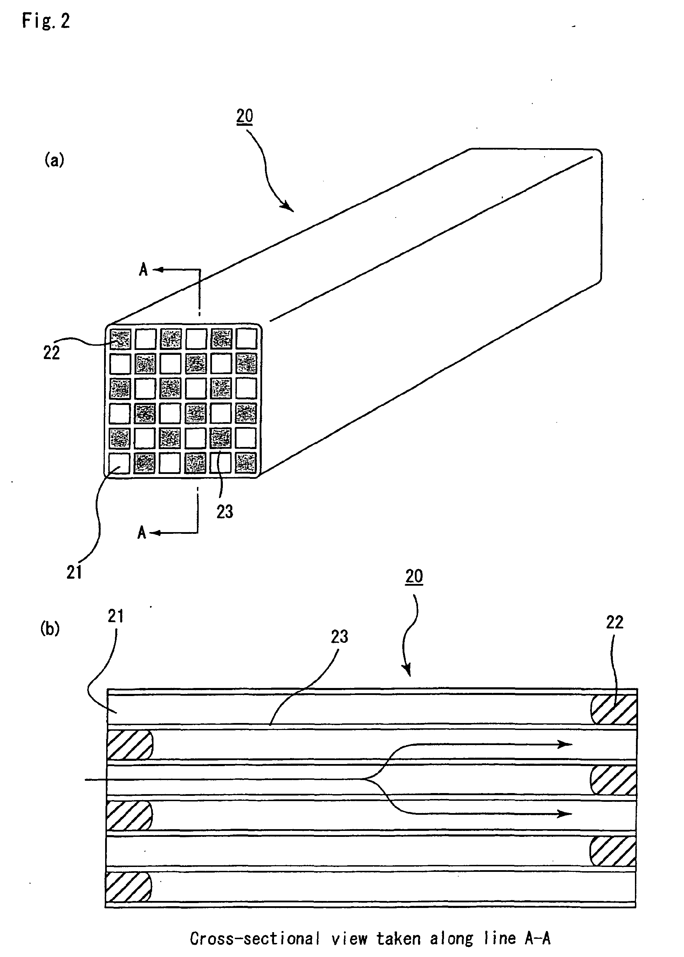

Fig. 2(a) is a perspective view that schematically shows one example of a porous ceramic member constituting the honeycomb filter shown in Fig. 1; and Fig. 2(b) is a cross-sectional view taken along line A-A of the porous ceramic member shown in Fig. 2(a).

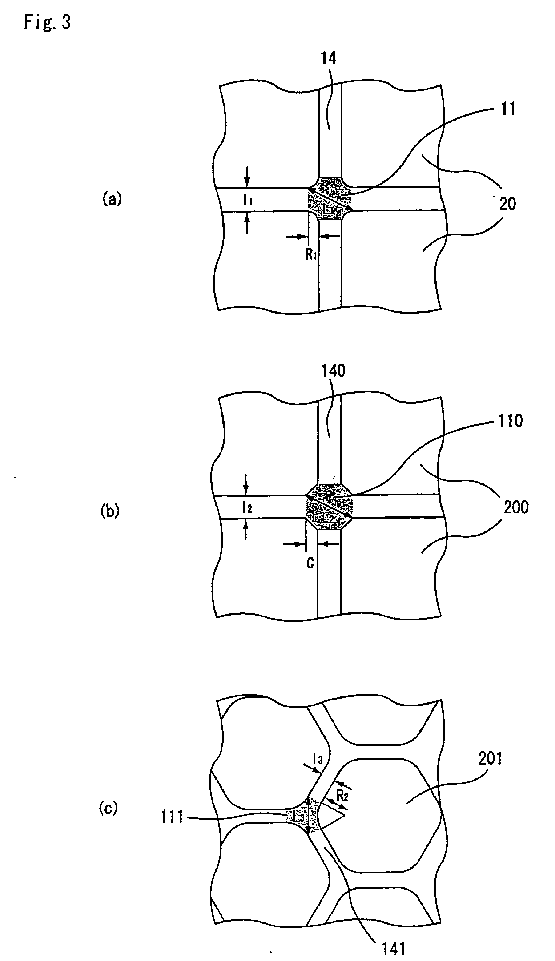

Fig. 3(a) is a partial enlarged cross-sectional view that schematically shows one example of a cross section of a ceramic block constituting the honeycomb filter of the present invention shown in Figs. 1, 2; Fig. 3(b) is a partial enlarged cross-sectional view that schematically shows another example of the cross section of the ceramic block constituting the honeycomb filter of the present invention; and Fig. 3(c) is a partial enlarged cross-sectional view that schematically shows still another example of the cross section of the ceramic block constituting the honeycomb filter of the present invention.

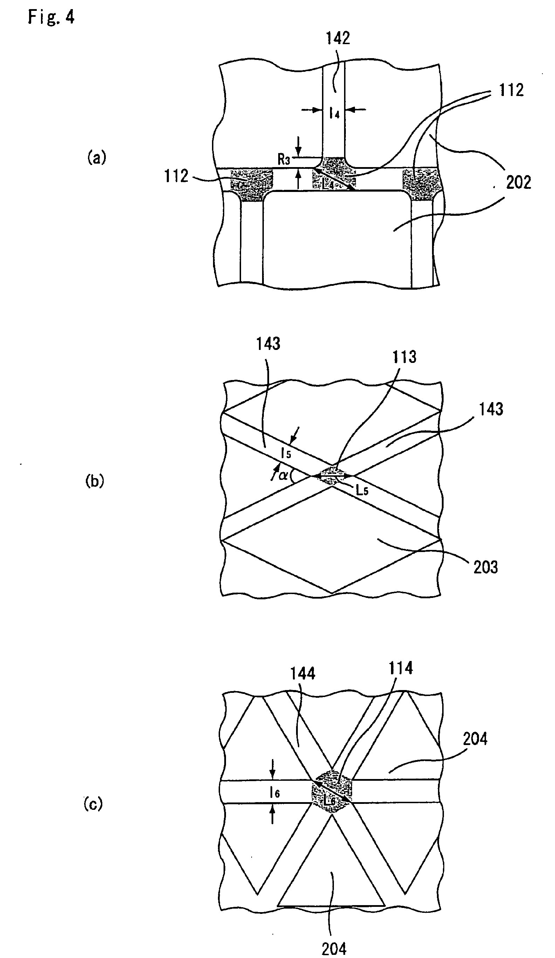

Fig. 4(a) is a partial enlarged cross-sectional view that schematically shows one example of the honeycomb filter for purifying exhaust gases of the present invention; Fig. 4(b) is a partial enlarged cross-sectional view that schematically shows another example of the honeycomb filter for purifying exhaust gases of the present invention; and Fig. 4(c) is a partial enlarged cross-sectional view that schematically shows still another example of the honeycomb filter for purifying exhaust gases of the present invention.

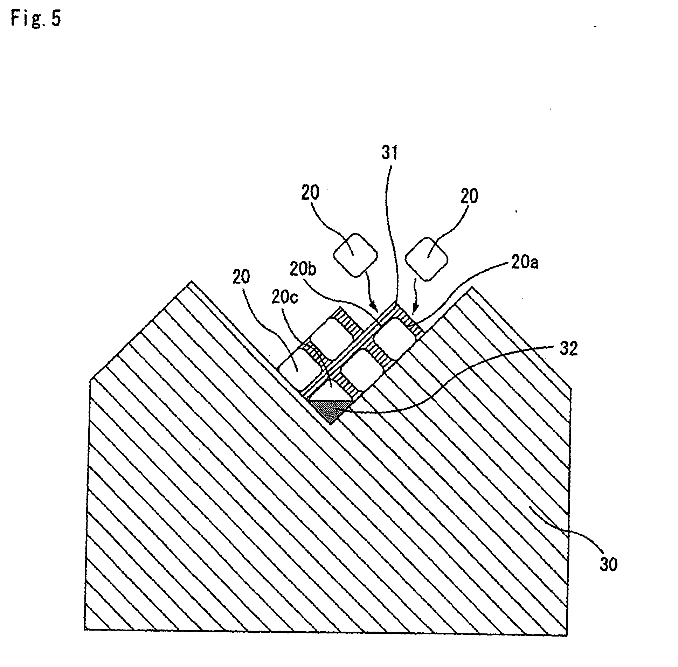

Fig. 5 is a side view that schematically shows a manufacturing process of the honeycomb filter for purifying exhaust gases of the present invention.

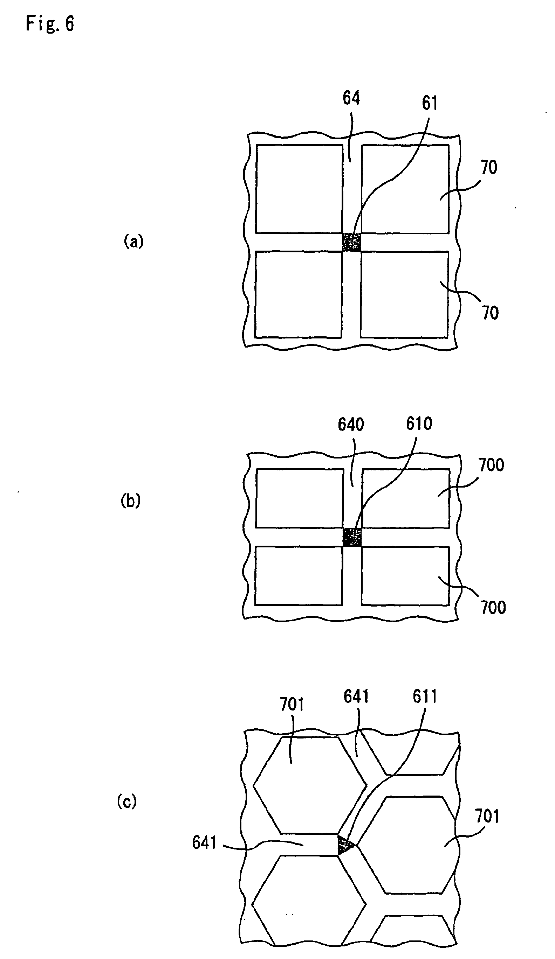

Fig. 6(a) is a partial enlarged cross-sectional view that schematically shows one example of a conventional honeycomb filter with a sealing material layer being formed on the circumferential portion of a ceramic block; Fig. 6(b) is a partial enlarged cross-sectional view that schematically shows another example of the conventional honeycomb filter with the sealing material layer being formed on the circumferential portion of the ceramic block; and Fig. 6(c) is a partial enlarged cross-sectional view that schematically shows still another example of the conventional honeycomb filter with the sealing material layer being formed on the circumferential portion of the ceramic block.

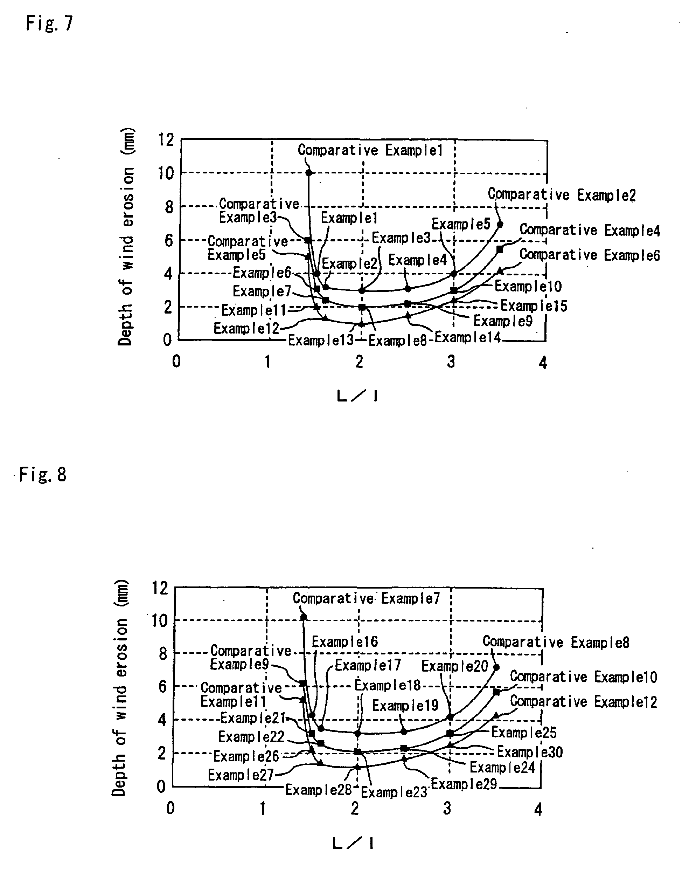

Fig. 7 is a graph that shows the relationship between the rate (L/l) of the maximum width L of a crisscross portion of sealing material layer formed between porous ceramic members to the minimum width l of the sealing material layer and the depth of wind erosion at the crisscross portion of the sealing material layer, in honeycomb filters according to Examples 1 to 15 and Comparative Examples 1 to 6.

Fig. 8 is a graph that shows the relationship between the rate (L/l) of the maximum width L of a crisscross portion of sealing material layer formed between porous ceramic members to the minimum width l of the sealing material layer and the depth of wind erosion at the crisscross portion of the sealing material layer, in honeycomb filters according to Examples 16 to 30 and Comparative Examples 7 to 12.

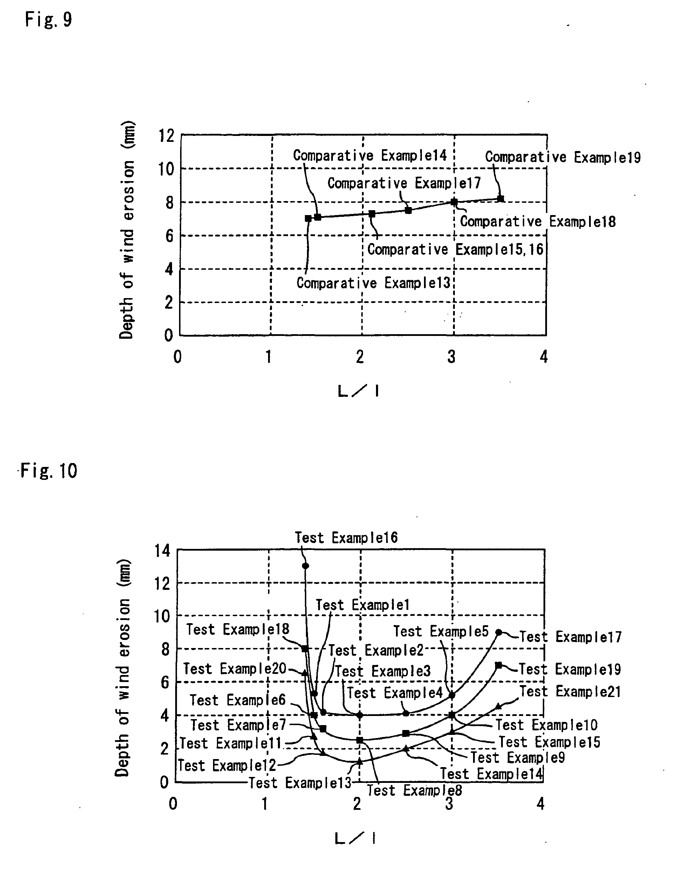

Fig. 9 is a graph that shows the relationship between the rate (L/l) of the maximum width L of a crisscross portion of sealing material layer formed between porous ceramic members to the minimum width l of the sealing material layer and the depth of wind erosion at the crisscross portion of the sealing material layer, in honeycomb filters according to Comparative Examples 13 to 19.

Fig. 10 is a graph that shows the relationship between the rate (L/l) of the maximum width L of a crisscross portion of sealing material layer formed between porous ceramic members to the minimum width l of the sealing material layer and the depth of wind erosion at the crisscross portion of the sealing material layer, in honeycomb filters according to Test Examples 1 to 21.

EXPLANATION OF SYMBOLS

10    honeycomb filter
11    crisscross portion
13    sealing material layer
14    sealing material layer
15    ceramic block
20    porous ceramic member
21    through hole
22    plug
23    partition wall

DETAILED DISCLOSURE OF THE INVENTION

The present invention is directed to a honeycomb filter for purifying exhaust gases which has a structure in which:

a plurality of rectangular columnar porous ceramic members are combined with one another through a sealing material layer to constitute a ceramic block, each of the above-mentioned rectangular columnar porous ceramic member comprising a number of through holes that are placed in parallel with one another in the length direction with partition wall interposed therebetween;
a sealing material layer is also formed on a circumference portion of the above-mentioned ceramic block; and
the above-mentioned partition wall which separates the above-mentioned through holes functions as a filter for collecting particulates,

wherein, on a cross section perpendicular to the length direction of the above-mentioned porous ceramic member of the above-mentioned ceramic block, the maximum width L (mm) of the crisscross portion of the sealing material layer is 1.5 to 3 times greater than the minimum width l (mm) of the above-mentioned sealing material layer.

Fig. 1 is a perspective view that schematically shows one example of a honeycomb filter for purifying exhaust gases of the present invention (hereinafter, also simply referred to as honeycomb filter of the present invention), and Fig. 2(a) is a perspective view that schematically shows one example of a porous ceramic member constituting the honeycomb filter shown in Fig. 1; and Fig. 2(b) is a cross-sectional view taken along line A-A of the porous ceramic member shown in Fig. 2(a).

As shown in Figs. 1 and 2, the structure of the honeycomb filter of the present invention may be almost the same as a conventional honeycomb filter.

In other words, a plurality of porous ceramic members 20 are combined with one another through sealing material layer 14 to constitute a ceramic block 15, and a sealing material layer 13 is also formed on a circumference portion of this ceramic block 15. Moreover, with respect to the porous ceramic member 20, circumferential corner portions are chamfered (R-chamfered face), and a number of through holes 21 are placed in parallel with one another in the length direction, so that partition wall 23 that separates the through holes 21 functions as a filter.

Here, with respect to the chamfered faces formed on the circumferential corners of the porous ceramic member 20, the detailed description thereof will be given later.

As shown in Fig. 2(b), each of the through holes 21 formed in the porous ceramic member 20 has either of its ends on the inlet-side or outlet-side of exhaust gases sealed with a plug 22; thus, exhaust gases that have entered one of the through holes 21 are allowed to flow out of another through hole 23 after always passing through the partition wall 23 that separates the corresponding through holes 21.

The sealing material layer 13 is provided so as to prevent exhaust gases from leaking from the circumferential portion of the ceramic block 15, when the honeycomb filter 10 is installed in an exhaust passage of an internal combustion engine. Here, the present inventor has found that by forming the sealing material layer 13 on the circumferential portion of the ceramic block, the strength and the like of the honeycomb filter can be improved, and that in comparison with the structure in which no sealing material layer 13 is formed, it becomes possible to reduce wind erosion at the crisscross portion of the sealing material layer. This is because, when the sealingmaterial layer 13 is formed on the circumferential portion of the ceramic block, a compressing force is exerted inward over the entire honeycomb filter so that the crisscross portion between the sealing material layer is compressed harder and solidified; thus, it becomes possible to improve the durability against wind erosion and cracks, and also to strengthen the durability against vibration.

Therefore, the honeycomb filter of the present invention optimizes the formation conditions of the sealingmaterial layer in order to reduce wind erosion occurring on the crisscross portion of the sealing material layer, in the structure in which the sealing material layer is formed on the circumferential portion of the ceramic block.

In the honeycomb filter of the present invention, on a cross section perpendicular to the length direction of the porous ceramic member of the ceramic block (hereinafter, also simply referred to as a cross section of the ceramic block), the maximum width L (mm) of the crisscross portion of the sealing material layer is made 1.5 to 3 times greater than the minimum width l (mm) of the sealing material layer.

Here, in the honeycomb filter of the present invention, the above-mentioned "crisscross portion of the sealing material layer" refers to: a region except for regions in which the sealing material layer is sandwiched by circumferential portions of the adjacent porous ceramic members, said portions are in parallel with each other on a cross section of the ceramic block of the honeycomb filter of the present invention.

In the case where the maximum width L of the crisscross portion of the sealing material layer is less than 1.5 times the minimum width l of the sealing material layer, exhaust gases are excessively concentrated on the crisscross portion, so that a great thermal stress tends to be exerted thereon, thereby forming a big depression at the crisscross portion. When the honeycomb filter having such a problem is used for a long time, a large amount of particulates are accumulated in this big depression, with the result that a great thermal stress is exerted during a regenerating process of the honeycomb filter to cause cracks in the sealing material layer.

Moreover, the sealing material layer is not completely a solid body, and exhaust gases are allowed to flow into the sealing material layer; therefore, when the maximum width L of the crisscross portion of the sealing material layer becomes 3 times greater than the minimum width l of the sealing material layer, the amount of exhaust gases flowing into the crisscross portion increases during operation of the honeycomb filter to cause a great thermal stress on the crisscross portion, with the result that a big depression is formed and cracks tend to occur. In the case of a honeycomb filter in which the maximum width L of the crisscross portion of the sealing material layer becomes 3 times greater than the minimum width l of the sealing material layer, the area on its end face, which is capable of purifying exhaust gases, decreases resulting in degradation in the exhaust gas purifying effects.

Therefore, in the honeycomb filter of the present invention, the maximum width L of the crisscross portion of the sealing material layer is made 1.5 to 3 times greater than the minimum width l of the sealingmaterial layer so that, even when a sealing material layer is formed on the circumferential portion of the ceramic block, it becomes possible to prevent a great thermal stress from exerting on the crisscross portion of the sealing material layer, and consequently to prevent occurrence of a big depression due to wind erosion.

Moreover, with respect to the shape of the honeycomb filter of the present invention, not limited to a cylindrical shape as shown in Fig. 1, for example, any desired shapes, such as an elliptical columnar shape and a rectangular columnar shape, may be proposed. In particular, the shape, such as the cylindrical shape and the elliptical columnar shape, with a curved face on the circumferential face in the length direction is preferably used. Normally, the exhaust passage of an internal combustion engine in which a honeycomb filter for purifying exhaust gases is installed has a shape that is expanded into a cone shape (tapered shape) immediately before the filter; therefore, all the exhaust gases are not allowed to flow in parallel with the filter, and various flows are generated in a space immediately before the filter, and allowed to flow into the filter. In this case, when the shape of the honeycomb filter of the present invention is not a rectangular columnar shape, but a shape in which the circumferential face in the length direction has a curved face, the flows of exhaust gases are allowed to easily form vortexes in the direction of the cross section of the filter so that the exhaust gases are easily made to flow into the filter in a spiral state; thus, it becomes possible to easily collect particulates evenly, and to evenly distribute wind erosion as a whole so as to be reduced, without being concentrated on the crisscross portion. Moreover, in the case where a catalyst or a catalyst supporting film is applied to the sealing material layer of the honeycomb filter of the present invention, the sealingmaterial layer tends to be formed unevenly to cause degradation in the sealing property and the adhesive property, as will be described later; however, in the filter in which the circumferential face in the length direction has a curved face, a drying process can be carried out evenly in comparison with a filter having a rectangular columnar shape, thereby making it possible to prevent the sealing material layer from being unevenly formed.

Fig. 6(a) is a partial enlarged cross-sectional view that schematically shows one example of a conventional honeycomb filter with a sealing material layer being formed on the circumferential portion of a ceramic block; Fig. 6(b) is a partial enlarged cross-sectional view that schematically shows another example of a conventional honeycomb filter with a sealing material layer being formed on the circumferential portion of a ceramic block; and Fig. 6(c) is a partial enlarged cross-sectional view that schematically shows still another example of a conventional honeycomb filter with a sealing material layer being formed on the circumferential portion of a ceramic block.

As shown in Figs. 6, in the conventional honeycomb filter with a sealingmaterial layer being formed on the circumferential portion of a ceramic block, each of a crisscross portion 61 (Fig. 6(a)) and a crisscross portion 610 (Fig. 6(b)) is square in the cross section of the ceramic block, and the maximum width L' of each of the crisscross portions 61 and 610 of these honeycomb filters is always $2^{1/2}$ times greater than the minimum width l' of the sealingmaterial layer, and a crisscross portion 611 (Fig. 6(c)) is equilateral triangle in the cross section of the ceramic block, and the maximum width L' of the crisscross portion 611 of this honeycomb filter is always 1 time of the minimum width l' of the sealing material layer.

In other words, in any of the crisscross portions 61, 610 and 611 of the conventional honeycomb filters each having a sealing material layer on the circumferential portion of a ceramic block shown in Figs. 6, the maximum width L' of each of the crisscross portions of the sealing material layer is less than 1.5 times the minimum width l' of the sealingmaterial layer, thus failing to satisfy the relationship between the maximum width L of the crisscross portion of the sealing material layer and the minimum width l of the sealing material layer in the honeycomb filter of the present invention.

Therefore, in the present invention, in the case where the cross section in the length direction of the porous ceramic member constituting the honeycomb filter has a shape, such as square, rectangular and right hexagon, in the same manner as the conventional honeycomb filters each havinga sealingmaterial layer on the circumferential portion of a ceramic block, a chamfering process is carried out on each of corner portions of the circumferential portion of the porous ceramic member, as shown in Figs. 3(a) to 3(c) so that the maximum width L of the crisscross portion of the sealing material layer is made 1.5 to 3 times greater than the minimum width 1 of the sealing material layer.

Fig. 3(a) is a partial enlarged cross-sectional view that schematically shows one example of a cross section of a ceramic block 15 constituting the honeycomb filter 10 of the present invention shown in Figs. 1 and 2; Fig. 3(b) is a partial enlarged cross-sectional view that schematically shows another example of a cross section of a ceramic block constituting the honeycomb filter of the present invention; and Fig. 3(c) is a partial enlarged cross-sectional view that schematically shows still another example of a cross section of a ceramic block constituting the honeycomb filter of the present invention.

Here, in the following description of Figs. 3(a) to 3(c), a portion corresponding to the circumference of the porous ceramic member in the cross section perpendicular to the length direction of the porous ceramic member is simply referred to as a circumference, and a portion corresponding to an R face (C face) formed on each of corner portions of the circumference of the porous ceramic member on the cross section perpendicular to the length direction of the porous ceramic member is simply referred to as an R face (C face).

Moreover, in Figs. 3(a) to 3(c), through holes, partition wall and the like, formed in the porous ceramic member, are not shown.

In a honeycomb filter 10 of the present invention shown in Fig. 3(a), the cross sectional shape that is perpendicular to the length direction of a porous ceramic member 20 is almost square or rectangular with R-chamfered face being formed on each of the corner portions on the circumference, and a crisscross portion 11 corresponds to: an area except for each of the areas at which the sealing material layer 14 is sandwiched by portions of circumferences, said portions are mutually in parallel with each other, of the adj acent four porous ceramic members 20; that is, an area formed by sectioning the sealing material layer 14 by lines each of which is formed by connecting the ends of R faces closer to each other among the R faces formed on corner portions of the circumference of each of two adjacent porous ceramic members 20 in the lateral direction as well as in the longitudinal direction.

Therefore, as shown in Fig. 3(a), the maximum width $L_1$ (mm) of this crisscross portion 11 corresponds to a distance between farther ends of opposing R faces of the porous ceramic members 20 diagonally adjacent to each other, and, more specifically, supposing that the minimum width of the sealing material layer 14 is $l_1$ (mm) and that the size of the chamfered face is $R_1$ (mm), this distance is calculated from Equation 1.

Equation 1

$$L_1 = \sqrt{(\ell_1 + 2 \times R_1)^2 + \ell_1{}^2} \tag{1}$$

Moreover, in the honeycomb filter of the present invention shown in Fig. 3(b), the cross sectional shape that is perpendicular to the length direction of a porous ceramic member 200 is almost square or rectangular with C-chamfered face being formed on each of the corner portions on the circumference, and a crisscross portion 110 corresponds to: a region except for each of the regions at which the sealing material layer 140 is sandwiched by portions of circumferences, said portions are mutually in parallel with each other, of the adj acent four porous ceramic members 200; that is, a region formed by sectioning the sealing material layer 140 by lines each of which is formed by connecting the ends of C faces closer to each other among the C faces formed on corner portions of the circumference of each of two adjacent porous ceramic members 200 in the lateral direction as well as in the longitudinal direction.

Therefore, as shown in Fig. 3(b), the maximum width $L_2$ (mm) of this crisscross portion 110 corresponds to a distance between farther ends of opposing C faces of the porous ceramic members 200 diagonally adjacent to each other and, more specifically, supposing that the minimum width of the sealing material layer 140 is $l_2$ (mm) and that the size of the chamfered face is C (mm), this distance is calculated from Equation 2.

Equation 2

$$L_2 = \sqrt{(\ell_2 + 2 \times C)^2 + \ell_2{}^2} \tag{2}$$

Moreover, in the honeycomb filter of the present invention shown in Fig. 3(c), the cross sectional shape that is perpendicular to the length direction of a porous ceramic member 201 is an almost right hexagon with R-chamfered face being formed on each of the corner portions on the circumference, and a crisscross portion 111 corresponds to: a region except for each of the regions at which the sealing material layer 141 is sandwiched by portions of circumferences, said portions are mutually in parallel with each other, of the adj acent three porous ceramic members 201; that is, a region formed by sectioning the sealing material layer 141 by lines each of which is formed by connecting the ends of R faces closer to each other among the R faces formed on the circumference of each of two adj acent porous ceramic members 201.

Therefore, as shown in Fig. 3(c), the maximum width $L_3$ (mm) of this crisscross portion 111 corresponds to a distance between farther ends of R faces of the porous ceramic members 200 adjacent to each other and, more specifically, supposing that the minimum width of the sealing material layer 141 is $l_3$ (mm) and that the size of the chamfered face is $R_2$ (mm), this distance is calculated from Equation 3.

Equation 3

$$L_3 = \ell_3 + R_2 \tag{3}$$

In the honeycomb filters of the present invention shown in Figs. 3(a) to 3(c), the size of each of the chamfered face $R_1$, C and $R_2$ is adjusted so that the maximum width L ($L_1$ to $L_3$) of each of the crisscross portions 11, 110 and 111 is made 1.5 to 3 times greater than the minimum width l ($l_1$ to $l_3$) of each of the sealing material layers 14, 140 and 141.

For example, in the honeycomb filter shown in Fig. 3(a), in the case where the above-mentioned $l_1$ is 1.0 mm, the above-mentioned $L_1$ is set from 1.5 to 3.0 mm by adjusting the size $R_1$ of the chamfered face in a range from 0.059 to 0.91 mm, based upon Equation (1).

Moreover, for example, in the honeycomb filter shown in Fig. 3(b), in the case where the above-mentioned $l_2$ is 1.0 mm, the above-mentioned $L_2$ is set from 1.5 to 3.0 mm by adjusting the size C of the chamfered face in a range from 0.059 to 0.91 mm, based upon Equation (2).

Furthermore, for example, in the honeycomb filter shown in Fig. 3(c), in the case where the above-mentioned $l_3$ is 1.0 mm, the above-mentioned $L_3$ is set from 1.5 to 3. 0 mm by adjusting the size $R_2$ of the chamfered face in a range from 0.5 to 2.0 mm, based upon Equation (3).

Here, in the honeycomb filter of the present invention, when the cross-sectional shape perpendicular to the length direction of the porous ceramic member is square or rectangular, with a chamfered face being formed on each of corners of the circumference, the above-mentioned porous ceramic members are not necessarily combined with one another in an evenly aligned manner in the longitudinal direction as well as in the lateral direction as shown in Fig. 3(a) or Fig. 3(b), and may be combined with one another in an offset state in the longitudinal direction or in the lateral direction.

Fig. 4(a) is a partial enlarged cross-sectional view that schematically shows one example of a cross section of each of ceramic blocks that constitute a honeycomb filter in which porous ceramic members are combined with one another in an offset state in the lateral direction.

Here, in the following description for Fig. 4(a), on a cross section perpendicular to the length direction of the porous ceramic member, a portion corresponding to the circumferential portion of the porous ceramic member is simply referred to as a circumference, and on the cross section perpendicular to the length direction of the porous ceramic member, a portion corresponding to an R-chamfered face formed on each of corners on the circumference of the porous ceramic member is simply referred to as an R face.

Moreover, in Fig. 4(a), through holes, partition wall and the like formed in the porous ceramic member are not shown.

In a honeycomb filter of the present invention shown in Fig. 4(a), the cross sectional shape that is perpendicular to the length direction of a porous ceramic member 202 is almost square or rectangular with R-chamfered face being formed on each of the corner portions on the circumference, and a crisscross portion 112 corresponds to: a region except for each of the regions at which the sealing material layer 142 is sandwiched by portions of circumferences, said portions are mutually in parallel with each other, of the adjacent three porous ceramic members 202; that is, a region formed by sectioning the sealing material layer 142 by lines each of which is formed by connecting the ends of R faces closer to each other among the R faces formed on the circumferences of two adjacent porous ceramic members 202 in the lateral direction and two perpendiculars that are drawn from the farther ends of the R faces toward the circumference of another adjacent porous ceramic members 202.

Therefore, as shown in Fig. 4(a), the maximum width $L_4$ (mm) of this crisscross portion 112 corresponds to a distance from the end of the R face of the porous ceramic member 202 that forms a starting point of one of the perpendiculars to a point at which the other perpendicular is made in contact with the circumference of the porous ceramic member 202 and, more specifically, supposing that the minimum width of the sealing material layer 142 is $l_4$ (mm) and that the size of the chamfered face is $R_3$ (mm), this distance is calculated from Equation 4.

Equation 4

$$L_4 = \sqrt{(\ell_4 + 2 \times R_3)^2 + \ell_4^2} \tag{4}$$

In the honeycomb filter of the present invention as shown in Fig. 4(a), the size of the chamfered face $R_3$ is adjusted so that the maximum width $L_4$ of the crisscross portion 112 is made 1.5 to 3 times greater than the minimum width $l_4$ of the sealing material layer 142.

More specifically, for example, in the case where the above-mentioned $l_4$ is 1.0 mm, the above-mentioned $L_4$ is set from 1.5 to 3.0 mm by adjusting the size $R_3$ of the chamfered face in a range from 0.059 to 0.91 mm, based upon Equation (4).

Moreover, in the honeycomb filter of the present invention, the cross-sectional shape in the length direction of the porous ceramic member may be a rhombic shape or a triangular shape, as shown in Figs. 4(b) and 4(c).

Fig. 4(b) is a partial enlarged cross-sectional view that schematically shows one example of the cross section of a ceramic block that constitutes a honeycomb filter of the present invention, and Fig. 4 (c) is a partial enlarged cross-sectional view that schematically shows another example of the cross section of a ceramic block that constitutes a honeycomb filter of the present invention.

Here, in the following description for Figs. 4(b) and 4(c), on a cross section perpendicular to the length direction of the porous ceramic member, a portion corresponding to the circumferential portion of the porous ceramic member is simply referred to as a circumference.

Moreover, in Figs. 4(b) and 4(c), through holes, partition wall and the like formed in the porous ceramic member are not shown.

In the honeycomb filter of the present invention shown in Fig. 4(b), a plurality of porous ceramic members 203, each having a rhombic shape in the cross section perpendicular to the length direction, are combined with one another through sealing material layer 143, and a crisscross portion 113 corresponds to: a region except for each of the regions at which the sealing material layer 143 is sandwiched by portions of circumferences, said portions are mutually in parallel with each other, of the adjacent four porous ceramic members 203; that is, a region having a rhombic shape formed by sectioning the sealing material layer 143 by lines each of which is formed by connecting the corners of the circumference of each of the four adjacent porous ceramic members 203.

Therefore, as shown in Fig. 4(b), the maximum width $L_5$ (mm) of this crisscross portion 113 corresponds to the longer of the diagonal lines of the rhombic crisscross portion 113 and, more specifically, supposing that the minimum width of the sealing material layer 143 is $l_5$ (mm) and that, on a cross section perpendicular to the length direction of the porous ceramic member 203, the angle of an acute apex is $\alpha$, this width is calculated from Equation 5.

Equation 5

$$L_5 = \frac{\ell_5}{\sin \alpha} \sqrt{2\,(1+\cos \alpha)} \qquad\qquad (5)$$

In the honeycomb filter of the present invention as shown in Fig. 4(b), the angle $\alpha$ of the acute apex on the cross section perpendicular to the length direction of the porous ceramic member 203 is adjusted so that the maximum width $L_5$ of the crisscross portion 113 is made 1.5 to 3 times greater than the minimum width $l_5$ of the sealing material layer 143.

More specifically, for example, in the case where the minimum width $l_5$ of the sealing material layer 143 is 1.0 mm, the maximum width $L_5$ of the crisscross portion 113 is set from 1.5 to 3.0 mm by adjusting the angle $\alpha$ of the acute apex of the porous ceramic member 203 in a range from 38.9 to 83.6°, based upon an equation, $\cos\alpha = 1 - 2l_5^2/L_5^2$, obtained by transforming Equation (5).

Here, in the honeycomb filter shown in Fig. 4(b), with respect to corner portions on the circumference of the porous ceramic member 203, providing chamfered faces such as an R-chamfered face and a C-chamfered face thereon is not an indispensable feature; however, when the corner portions on the circumference of the porous ceramic member 203 are pointed, a thermal stress is concentrated and exerted on these portions to easily cause cracks so that it is desirable to provide the chamfered faces.

In a honeycomb filter of the present invention shown in Fig. 4(c), a plurality of porous ceramic members 204 each of which has a triangular cross section perpendicular to the length direction are combined with one another through sealing material layer 144, and a crisscross portion 114 corresponds to: an area except for each of the areas at which the sealing material layer 144 is sandwiched by portions of circumferences, said portions are mutually in parallel with each other, of the adjacent six porous ceramicmembers 204; that is, a right hexagonal area formed by sectioning the sealing material layer 144 by lines each of which is formed by connecting the corner portions on the circumference of each of six adjacent porous ceramic members 204.

Therefore, as shown in Fig. 4(c), the maximum width $L_6$ (mm) of this crisscross portion 114 corresponds to a distance between the corner portions of the porous ceramic members 204 that diagonally face each other through the crisscross portion 114 and, more specifically, supposing that the minimum width of the sealing material layer 144 is $l_6$ (mm), this distance is calculated from Equation 6.

Equation 6

$$L_6 = 2 \times \ell_6 \qquad\qquad (6)$$

In the honeycomb filter of this type shown in Fig. 4(c), the maximum width $L_6$ of the crisscross portion 114 is always made 2 times greater than the minimum width $l_6$ of the sealing material layer 144.

More specifically, for example, in the case where the minimum width $l_6$ of the sealing material layer 144 is 1.0 mm, the above-mentioned $L_6$ is set to 2.0 mm based upon Equation (6).

Here, in the honeycomb filter shown in Fig. 4(c), with respect to corner portions on the circumference of the porous ceramic member 204, providing chamfered faces such as an R-chamfered face and a C-chamfered face thereon is not an indispensable feature; however, when the corner portions on the circumference of the porous ceramic member 204 are pointed, a thermal stress is concentrated and exerted on these portions to easily cause cracks so that it is preferable to provide the chamfered faces.

As described above, in the honeycomb filter of the present invention, providing chamfered faces on the corner portions of the circumference of the porous ceramic member is not an indispensable feature, and depending on the shapes of the cross section perpendicular to the length direction of the porous ceramic member, it is not necessary to provide chamfered faces on the corner portions on the circumference.

Here, JP Kokai 2001-96117 has disclosed a ceramic filter aggregated body in which each of corner portions on the circumferential face of a honeycomb filter has an R face of 0.3 to 2.5 mm.

Moreover, JP Kokai 2001-190916 has disclosed a honeycomb structural body in which each of corner portions on a cross sectional shape of each honeycomb segment is rounded with a curvature radius of 0.3 mm or more, or has a chamfered face of 0.5 mm or more.

The ceramic filter aggregated body and the honeycomb structural body described in these publications are partially in common with the honeycomb filter of the present invention in that corner portions on the circumference of the honeycomb filter and the honeycomb segment are rounded or have chamfered faces; however, these publications neither describe a structure inwhich a sealingmaterial layer is formed on the circumferential portion, nor define a relationship between the maximum width L of a crisscross portion of the sealing material layer and the minimum width l of the sealing material layer on a cross section of a ceramic block that constitutes a honeycomb filter.

In other words, the inventions described in the above-mentioned publications are different from the honeycomb filter of the present invention in the structure thereof, and the novelty and inventive step of the honeycomb filter of the present invention are not inhibited by these publications.

In the honeycomb filter of the present invention, although not particularly limited, the maximum width L (mm) of the crisscross portion of the sealing material layer on the cross section of the ceramic block is desirably set in a range from 0.2 to 9 mm. When it is less than 0.2 mm, the thickness of the sealing material layer becomes very thin, the porous ceramic members are not preferably combined with one another. In contrast, when it exceeds 9 mm, the thickness of the sealing material layer becomes very thick, resulting in the necessity of providing a very large honeycomb filter in an attempt to sufficiently ensure the permeation-capable range of the honeycomb filter.

In the honeycomb filter of the present invention, the material for the porous ceramic member is not particularly limited, and examples thereof may include: nitride ceramics such as aluminum nitride, silicon nitride, boron nitride, titanium nitride and the like, carbide ceramics such as silicon carbide, zirconium carbide, titanium carbide, tantalum carbide, tungsten carbide and the like, and oxide ceramics such as alumina, zirconia, cordierite, mullite and the like. In particular, silicon carbide, which is superior in mechanical strength and has high heat resistance and high thermal conductivity, is desirably used. Here, silicon-containing ceramics in which metallic silicon is blended in the above-mentioned ceramics and ceramics that are combined by silicon and a silicate compound may be used.

Although not particularly limited, the porosity of the porous ceramic member is desirably set in a range from 40 to 80%. When the porosity is less than 40%, the honeycomb filter is more likely to generate clogging, while the porosity exceeding 80% causes degradation in the strength of the porous ceramic member, with the result that it might be easily broken.

Here, the above-mentioned porosity can be measured through known methods such as a mercury press-in method, Archimedes method, a measuring method us ing a scanning electronic microscope (SEM), and the like.

The average pore diameter of the porous ceramic member is preferably set in a range from 5 to 100 μm. The average pore diameter of less than 5 μm tends to cause clogging of particulates easily. In contrast, the average pore diameter exceeding 100 μm tends to cause particulates to pass through the pores, with the result that the particulates cannot be collected, making the honeycomb filter unable to function as a filter.

With respect to the particle size of ceramic particles to be used upon manufacturing the porous ceramic member, although not particularly limited, those which are less likely to generate shrinkage in the succeeding sintering process are desirably used, and for example, those particles, prepared by combining 100 parts by weight of powder having an average particle size from 0.3 to 50 μm with 5 to 65 parts by weight of powder having an average particle size from 0.1 to 1. 0 μm, are desirably used. By mixing ceramic powders having the above-mentioned respective particle sizes at the above-mentioned blending ratio, it is possible to manufacture a porous ceramic member.

In the honeycomb filter of the present invention, a plurality of these porous ceramic members are combined with one another through sealing material layer to constitute a ceramic block, and a sealing material layer is also formed on the circumference portion of this ceramic block.

In other words, in the honeycomb filter of the present invention, the sealing material layer is formed between the porous ceramic members as well as on the circumference of the ceramic block so that the sealing material layer, formed between the porous ceramic members, is allowed to function as adhesive layer that combines the porous ceramic members with one another, and, in contrast, the sealing material layer formed on the circumference of the ceramic block functions as a sealing material that prevents exhaust gases from leaking from the circumference of the ceramic block, when the honeycomb filter of the present invention is installed in an exhaust passage of an internal combustion engine.

The material forming the sealing material layer is not particularly limited, and examples thereof may includematerials such as an inorganic binder, an organic binder, inorganic fibers, inorganic particles and the like.

Here, in the honeycomb filter of the present invention, the sealing material layer is formed between the porous ceramic members as well as on the circumference of the ceramic block as described earlier, and the respective sealing material layer may be made of the same material, or may be made of different materials. In the case where the respective sealing material layer is made of the same material, the blending ratio of the materials may be the same or different.

Examples of the inorganic binder may include silica sol, alumina sol and the like. Each of these may be used alone or two or more kinds of these may be used in combination. Among the inorganic binders, silica sol is more desirably used.

Examples of the organic binder may include polyvinyl alcohol, methyl cellulose, ethyl cellulose, carboxymethyl cellulose and the like. Each of these may be used alone or two or more kinds of these may be used in combination. Among the organic binders, carboxymethyl cellulose is more desirably used.

Examples of the inorganic fibers may include ceramic fibers such as silica-alumina, mullite, alumina, silica and the like. Each of these may be used alone or two or more kinds of these may be used in combination. Among the inorganic fibers, silica-alumina fibers are desirably used.

Examples of the inorganic particles may include carbides, nitrides and the like, and specific examples thereof may include inorganic powder or whiskers made of silicon carbide, silicon nitride, boron nitride and the like. Each of these may be used alone, or two or more kinds of these may be used in combination. Among the inorganic fine particles, silicon carbide having superior thermal conductivity is desirably used.

Moreover, a catalyst is desirably applied to the honeycomb filter of the present invention. When such a catalyst is supported thereon, the honeycomb filter of the present invention functions as a filter capable of collecting particulates in exhaust gases, and also functions as a catalyst supporting member for purifying CO, HC, NOx and the like contained in exhaust gases.

With respect to the catalyst, not particularly limited as long as it can purify CO, HC, NOx and the like in exhaust gases, examples thereof may include noblemetals such as platinum, palladium, rhodium and the like. In addition to the noble metals, an element such as an alkali metal (Group 1 in Element Periodic Table), an alkali earthmetal (Group 2 in Element Periodic Table), a rare-earth element (Group 3 in Element Periodic Table) and a transition metal element, may be added thereto.

Moreover, upon applying the catalyst onto the honeycomb filter of the present invention, it is preferable to apply the catalyst, after the surface thereof has been preliminarily coated with a catalyst supporting film. This arrangement makes it possible to increase the specific surface area, to increase the degree of dispersion of the catalyst, and consequently to increase the reactive portion of the catalyst. Here, since the catalyst supporting film also prevents sintering of the catalyst metal, the heat resistance of the catalyst can be improved. In addition, the pressure loss is also lowered.

With respect to the catalyst supporting film, not particularly limited as long as it has a high specific surface area, for example, a film made of a material such as alumina, zirconia, titania, silica and the like may be used.

Here, the above-mentioned catalyst may be applied to the porous ceramic member, or may be applied to the sealing material layer. In the same manner, the above-mentioned catalyst supporting film may be applied to the porous ceramic member, or may be applied to the sealing material layer. In other words , the above-mentioned catalyst and catalyst supporting film may be applied to the entire honeycomb f ilter of the present invention, or are not necessarily applied to the entire honeycomb filter of the present invention.

With respect to the method for applying the above-mentioned catalyst and the above-mentioned catalyst supporting film to the honeycomb filter of the present invention, not particularly limited, for example: after a catalyst or a catalyst supporting film has been applied to each porous ceramic member by a method in which each porous ceramic member is immersed in a slurry solution (dispersion solution) and dried or by using a sol-gel method or the like, the porous ceramic members are formed into a ceramic block may be used; a method in which each ceramic block is immersed in a slurry solution and dried or a method in which a catalyst or a catalyst supporting film is applied to each ceramic block by using a sol-gel method; or the like may be used. In the former method, the catalyst and the catalyst supporting film are not applied to the sealing material layer. In the latter method, the catalyst and the catalyst supporting film are applied to the sealing material layer.

With respect to the slurry solution, not particularly limited, as long as it contains materials to form the catalyst and the catalyst supporting film, or contains raw materials thereof, for example, a dispersion solution, prepared by dispersing $\gamma$-$Al_2O_3$ powder in a solvent, is used in the case of forming a catalyst supporting film made of alumina.

Here, in the case of manufacturing the honeycomb filter of the present invention having a rectangular columnar shape by using the method for applying a catalyst and a catalyst supporting film to a ceramic block, the sealing material layer tends to become uneven, resulting in degradation in the sealing property and adhesive property. This is presumably caused by the following reasons: since the ceramic block is constituted by the porous ceramic member and the sealing material layer, that are different in compositions, with the porous ceramic member and the sealing material layer having mutually different absorbing rates for the solvent; therefore, in the drying process in the method in which it is immersed in a slurry solution and dried or the sol-gel method, a contact portion (surface layer portion) between the sealing material layer and the porous ceramic member at corner portions is abruptly dried so that the solvent is abruptly drawn from a portion of the sealing material layer that is not made in contact with the porous ceramic member (inner layer portion) at corner portions, with the result that voids occur in the inner layer portion of the sealing material layer at the corner portions to cause deviations in the density distribution in the sealing material layer.

The above-mentioned honeycomb filter of the present invention in which a catalyst is supported is allowed to function as a gas purifying device in the same manner as the conventionally known DPFs (Diesel Particulate Filters) with catalyst. Therefore, the detailed description of the case in which the honeycomb filter of the present invention also serves as a catalyst supporting member will not be given herein.

As described above, the honeycomb filter of the present invention is designed so that, on a cross section perpendicular to the length direction of the porous ceramicmember of the ceramic block, the maximum width L (mm) of the crisscross portion of the sealing material layer is 1.5 to 3 times greater than the minimum width l (mm) of the sealing material layer.

Therefore, in the honeycomb f ilter of the present invention, the crisscross portion in the sealing material layer is less likely to suffer from concentrated wind erosion due to exhaust gases during the operation, and the amount of exhaust gases to flow into the crisscross portion is also reduced; therefore, even after the honeycomb filter has been used repeatedly for a long time, it is possible to prevent a big depression from being formed in the crisscross portion of the sealing material layer, and also to prevent cracks from occurring due to a thermal stress caused by exhaust gases and the like to flow into the crisscross portion; thus, it becomes possible to make the honeycomb filter superior in durability.

Next, description will be given of one example of a manufacturing method for the above-mentioned honeycomb filter of the present invention. Here, in the following description, it is supposed that the cross-sectional shape in the length direction of the porous ceramic member forming the honeycomb filter of the present invention has an almost square shape with R-chamfered faces formed on the corner portions on the circumference, as shown in Fig. 3(a). Therefore, in the following description, the manufacturing method will be appropriately described with reference to Figs. 1, 2 and 3(a).

Upon manufacturing the honeycomb filter of the present invention, first, a ceramic laminated body to form the ceramic block 15 is manufactured.

This ceramic laminated body has an almost rectangular columnar structure in which: a plurality of columnar porous ceramic members 20 are combined with one another through sealing material layer 14, each of said columnar porous ceramic members having a number of through holes placed in parallel with one another in the length direction with partition wall interposed therebetween and having chamfered faces on the circumference thereof.

Upon forming the porous ceramic member 20, first, a binder and a dispersant solution are added to the above-mentioned ceramic powder to prepare a mixed composition.

The above-mentioned binder is not particularly limited, and examples thereof may include methylcellulose, carboxy methylcellulose, hydroxy ethylcellulose, polyethylene glycol, phenol resins, epoxy resins and the like.

Normally, the blend ratio of the above-mentioned binder is desirably set to about 1 to 10 parts by weight to 100 parts by weight of ceramic powder.

The above-mentioned dispersant solution is not particularly limited, and examples thereof may include an organic solvent such as benzene, alcohol such as methanol, and water, and the like.

An appropriate amount of the above-mentioned dispersant solution is blended so that the viscosity of the mixed composition is set in a predetermined range.

These ceramic powder, binder and dispersant solution are mixed by an attritor or the like, and sufficiently kneaded by a kneader or the like, and then formed into a rectangular columnar raw molded body through an extrusion-molding method or the like.

Next, the above-mentioned raw molded body is dried by using a microwave dryer or the like to form a ceramic dried body, and the circumference of the ceramic dried body is subjected to a chamfering process (R-chamfered face).

With respect to the size of the chamfered face, not particularly limited, the size is appropriately adjusted so that the maximum width L (mm) of the crisscross portion of the sealing material layer formed between the porous ceramic members is 1.5 to 3 times greater than the minimum width l (mm) of the sealing material layer on the cross section of the honeycomb filter after the manufacturing process. Here, instead of carrying out the chamfering process on the circumference of the ceramic dried body, the above-mentioned raw molded body may be formed so as to preliminarily shape the circumference into a chamfered state, upon extrusion-molding the raw molded body, or after carrying out degreasing and sintering processes to manufacture a sintered body, as will be described later, the corner portions of the circumference of the sintered body may be subj ected to chamfering processes.

Next, predetermined through holes of the ceramic dried body that has been subjected to the chamfering processes are filled with a mouth-sealing material (plug) so that a mouth-sealing process is carried out, and this is again dried through a microwave dryer or the like.

With respect to the mouth-sealing material (plug), not particularly limited, for example, the same material as the above-mentioned mixed composition may be used.

Next, the raw molded body that has been subjected to the mouth-sealing process is subjected to a degreasing process by heating it to a temperature of 400 to 650°C in an oxygen-containing atmosphere; thus, the binder and the like are vaporized, decomposed and eliminated so that almost only the ceramic powder is allowed to remain.

Next, the molded body that has been degreased is sintered by heating it at about 1400 to 2200°C in an inert gas atmosphere such as nitrogen and argon so that a porous ceramic member 20 is manufactured.

Next, a ceramic laminated body as shown in Fig. 5 is manufactured.

In other words, porous ceramic members 20 are mounted on a base 30 the upper portion of which is designed to have a V-shape in its cross-section so as to allow the porous ceramic members 20 to be stacked thereon in a tilted manner, and sealing material paste to form a sealing material layer 14 is then applied onto two side faces 20a and 20b facing upward with an even thickness to form a sealing material paste layer 31; thereafter, a laminating process for forming another porous ceramic member 20 on this sealing material paste layer 31 is successively repeated so that a rectangular columnar ceramic laminated body having a predetermined size is manufactured. At this time, with respect to the porous ceramic members 20 corresponding to four corners of the ceramic laminated body, a triangular columnar porous ceramic member 20c, which is formed by cutting a quadrangular columnar porous ceramic member into two, is bonded to a resin member 32 having the same shape as the triangular columnar porous ceramic member 20c by using a both-sides tape with easy peelability to prepare a corner member , and these corner members are used for the four corners of the ceramic laminated body, and after the lamination processes of the porous ceramic members 20, all the resin members 32 forming the four corners of the ceramic laminated body are removed; thus, a ceramic laminated body having a polygonal columnar shape in its cross section may be formed. With this arrangement, it is possible to reduce the quantity of a waste corresponding to porous ceramic members to be disposed of, after the formation of the ceramic block by cutting the peripheral portion of the ceramic laminated body.

With respect to a method for manufacturing the ceramic laminated body having a polygonal columnar shape in its cross section except for the method shown in Fig. 5, for example, a method in which the porous ceramic members to be located on four corners are omitted and a method in which porous ceramic members having a triangular columnar shape are combined with one another may be used, in accordance with the shape of a honeycomb filter to be manufactured. Here, a quadrangular columnar ceramic member may of course be manufactured.

Further, this ceramic laminated body is heated in a temperature range from 50 to 100°C for about 1 hour so that the sealing material paste layer is dried and solidified to form a sealing material layer 14; thereafter, by cutting the circumference portion thereof by using a diamond cutter or the like, a cylindrical ceramic block 15 is manufactured.

The material for forming the sealing material layer 14 is not particularly limited, and examples thereof may include the above-mentioned adhesive paste containing an inorganic binder, an organic binder, inorganic fibers and inorganic particles.

Moreover, the above-mentioned sealing material paste may contain a small amount of moisture, solvent and the like, and most of these moisture, solvent and the like are scattered and evaporated through a heating process and the like after the coating process of the sealing material paste.

Here, the lower limit of the content of the inorganic binder is desirably set to 1% by weight, more desirably 5% by weight on a solid component basis. In contrast, the upper limit of the content of the inorganic binder is desirably set to 30% by weight, more desirably 15% by weight, most desirably 9% by weight on a solid component basis. The content of the inorganic binder of less than 1% by weight tends to cause a reduction in the bonding strength, while the content exceeding 30% by weight tends to cause a reduction in the thermal conductivity.

Here, the lower limit of the content of the organic binder is desirably set to 0.1% by weight, more desirably 0.2% by weight, most desirably 0.4% by weight on a solid component basis. In contrast, the upper limit of the content of the organic binder is desirably set to 5.0% by weight, more desirably 1.0% by weight, most desirably 0.6% by weight on a solid component basis. The content of the organic binder of less than 0.1% by weight tends to cause a difficulty in suppressing migration of the sealing material layer 14; in contrast, in the case of the content exceeding 5.0% by weight, when the sealing material layer 14 is exposed to high temperatures, the organic binder is burned and eliminated, resulting in a reduction in the bonding strength.

The lower limit of the content of the inorganic fibers is desirably set to 10% by weight, more desirably 20% by weight on a solid component basis. In contrast, the upper limit of the content of the inorganic fibers is desirably set to 70% by weight, more desirably 40% by weight, most desirably 30% byweight on a solid component basis. The content of the inorganic fibers of less than 10% by weight tends to cause a reduction in elasticity and thermal conductivity, while the content exceeding 70% by weight tends to cause a reduction in thermal conductivity and degradation in effects as an elastic member.

Here, the lower limit of the content of the inorganic particles is desirably set to 3% by weight, more desirably 10% by weight, most desirably 20% by weight on a solid component basis. In contrast, the upper limit of the content of the inorganic particles is desirably set to 80% by weight, more desirably 60% by weight, most desirably 40% by weight on a solid component basis. The content of the inorganic particles of less than 3% by weight tends to cause a reduction in thermal conductivity, while the content exceeding 80% by weight tends to cause a reduction in bonding strength when the sealingmaterial layer 14 is exposed to high temperatures.

Here, the lower limit of the shot content of the inorganic fibers is desirably set to 1% by weight, and the upper limit thereof is desirably set to 10% by weight, more desirably 5% by weight, most desirably 3% by weight. The lower limit of the fiber length is desirably set to 1 mm, and the upper limit thereof is desirably set to 100 mm, more desirably 50 mm, most desirably 20 mm.

The shot content of less than 1% by weight is difficult to be achieved in the manufacturing, and the shot content exceeding 10% by weight tends to damage wall faces of the porous ceramic member 20. Moreover, the fiber length of less than 1 mm makes it difficult to form a honeycomb filter having an appropriate elasticity, and in contrast, the fiber length exceeding 100 mm tends to form fibers into a pill shape, resulting in degradation in dispersion of inorganic particles and the subsequent difficulty in making the thickness of the sealing material layer 14 thinner.

Here, the lower limit of the particle size of the inorganic particles is desirably set to 0.01 μm, more desirably 0.1 μm. In contrast, the upper limit of the particle size of the inorganic particles is desirably set to 100 μm, more desirably 15 μm, most desirably 10 μm. The particle size of inorganic particles of less than 0.01 μm tends to cause high costs, and in contrast, the particle size of inorganic particles exceeding 100 μm tends to cause degradation in bonding strength and thermal conductivity.

In addition to the above-mentioned inorganic fibers, inorganic binder, organic binder and inorganic particles, the sealing material paste may contain about 35 to 65% by weight to the total weight of moisture and another solvent such as acetone and alcohol, in order to make the sealing material paste softer to provide proper flowability so as to allow easy application, and the viscosity of the sealing material paste is desirably set in a range of 15 to 25 Pa·s (10000 to 20000 cps (cP)).

Next, a sealingmaterial forming process in which a sealing material layer 13 is formed on the circumference of the ceramic block 15 thus manufactured is carried out.

In this sealing material forming process, first, the ceramic block 15 is rotated around an axis on which it is supported in the length direction.

Although not particularly limited, the rotational speed of the ceramic block 15 is desirably set in a range from 2 to 10 min$^{-1}$.

Successively, sealing material paste is allowed to adhere to the circumference of the rotating ceramic block 15. With respect to the sealing material paste, not particularly limited, those described earlier may be used.

Next, the sealing material paste layer thus formed is dried at about 120°C so that the moisture is evaporated to form a sealing material layer 13, thereby completing the manufacturing processes of the honeycomb filter 10 of the present invention in which the sealing material layer 13 is formed on the circumference of the ceramic block 15.

With respect to the manufacturing method for the honeycomb filter of the present invention, the above description has discussed the honeycomb filter in which the porous ceramic member has a cross-sectional shape perpendicular to the length direction as shown in Fig. 3(a); however, the cross-sectional shape of the porous ceramic member forming the honeycomb filter of the present invention is not intended to be limitedby this structure, and, for example, the porous ceramic member may have cross-sectional shapes as shown in Figs. 3(b) and 3(c) or other cross-sectional shapes as shown in Figs. 4(a) to 4(c).

BEST MODE FOR CARRYING OUT THE INVENTION

Description will be given of the present invention in detail by means of examples; however, the present invention is not limited to these examples.

(Example 1)

(1) Powder of α-type silicon carbide having an average particle size of 5 μm (60% by weight) and powder of β-type silicon carbide having an average particle size of 0.5 μm (40% by weight) were wet-mixed, and to 100 parts by weight of the resultingmixture were added and kneaded 5 parts by weight of an organic binder (methyl cellulose) and 10 parts by weight of water to obtain amixed composition. Next, after a slight amount of a plasticizer and a lubricant have been added and kneaded therein, the resulting mixture was extrusion-molded so that a raw formed body was manufactured.

Next, the above-mentioned raw formed body was dried by using a microwave drier to form a ceramics dried body, and R-chamfered faces are formed by cutting corner portions of the circumference of this ceramics dried body so that each of the corner portions is allowed to have an R face of R = 0.0059 mm.

Thereafter, predetermined through holes were then filled with a paste having the same composition as the raw formed body, and after having been again dried by using a drier, this was degreased at 400°C, and sintered at 2200°C in a normal-pressure argon atmosphere for 3 hours to manufacture a column-shaped porous ceramic member, which was a silicon carbide sinteredbody, and had a size of 33 mm × 33 mm × 300 mm, the number of through holes of 31 pcs/cm$^2$ and a thickness of the partition wall of 0.3 mm.

(2) By using a heat resistant sealing material paste containing 30% by weight of alumina fibers having a fiber length of 0.2 mm, 21% by weight of silicon carbide particles having an average particle size of 0.6 μm, 15% by weight

of silica sol, 5.6% by weight of carboxymethyl cellulose and 28.4% by weight of water, the processes as explained by reference to Fig. 5 were carried out so that 25 (5 in longitudinal direction × 5 in lateral direction) porous ceramicmembers were combinedwith one another, and this was then cut by using a diamond cutter to form a cylindrical shaped ceramic block having 165 mm in diameter.

In this case, the thickness of the sealing material layer used for combining the column-shaped porous ceramic members was adjusted to 0.1 mm.

Next, ceramic fibers made from alumina silicate (shot content: 3%, fiber length: 0.1 to 100 mm) (23.3% by weight), which served as inorganic fibers, silicon carbide powder having an average particle size of 0.3 $\mu$m (30.2% by weight), which served as inorganic particles, silica sol ($SiO_2$ content in the sol: 30% by weight) (7% by weight), which servedas an inorganicbinder, carboxymethyl cellulose (0.5% by weight), which served as an organic binder, and water (39% by weight) were mixed and kneaded to prepare a sealing material paste.

Next, a sealing material paste layer having a thickness of 1.0 mm was formed on the circumferential portion of the ceramic block by using the above-mentioned sealing material paste. Further, this sealing material paste layer was dried at 120°C so that a cylindrical honeycomb structural bodywasmanufactured.

The cross-sectional shape of the ceramic block for the honeycomb filter according to Example 1 is almost the same as that shown in Fig. 3(a), and on the end face of the ceramic block, the maximum width L of each crisscross portion of the sealing material layer formed between the porous ceramic members was 0.15 mm, the minimum width l of the sealing material layer was 0.10 mm, and the maximum width L of the crisscross portion was 1.5 times greater than the minimum width l of the sealingmaterial layer.

(Examples 2 to 15, Comparative Examples 1 to 6)

The same processes as (1) of Example 1 were carried out except that the size of the chamfered face R formed on each of the corner portions of the circumference of the ceramics dried body was set to each of values shown in Table 1 so that a porous ceramic member was manufactured.

The same processes as (2) of Example 1 were carried out except that the above-mentioned porous ceramic member was used and that the thickness of the sealing material layer formed between the porous ceramic members was set to each of values as shown in Table 1 so that a honeycomb filter was manufactured.

The cross-sectional shape of the ceramic block for each of the honeycomb filters according to Examples 2 to 15 was almost the same as that shown in Fig. 3(a). Here, on the end face of the ceramic block, the maximum width L of each crisscross portion of the sealing material layer formed between the porous ceramic members, the minimum width 1 of the sealing material layer, and the rate of the maximum width L of the crisscross portion to the minimum width 1 of the sealing material layer are respectively shown in Table 1.

(Evaluation Test 1)

An alumina layer to form a base layer on which a catalyst is supported was affixed at a rate of 1 g/L on each of the honeycomb filters according to Examples 1 to 15 and Comparative Examples 1 to 6, and platinum serving as a catalyst for purifying exhaust gases was applied thereto at a rate of 2 g/L. Here, the water-absorbing rate in the honeycomb filters according to Examples 1 to 15 and Comparative Examples 1 to 6 was 25 g with respect to 100 g of the dried sealing material, and 23 g with respect to 100 g of the dried porous ceramic member.

Each of the honeycomb filters according to Examples 1 to 15 and Comparative Examples 1 to 6, to which the catalyst had been applied, was installed in an exhaust passage of an engine, and the engine was driven at the maximum number of revolutions (3700 rpm, 0 Nm) in a no load state for 100 hours. After the driving operation, each of the honeycomb filters was taken out and measurements were carried out to examine wind erosion caused on each sealing material layer formed between the porous ceramic members with respect to the end face on the exhaust gas inlet side.

(Evaluation Test 2)

After Evaluation Test 1, each of the honeycomb filters according to Examples 1 to 15 and Comparative Examples 1 to 6 was placed in an exhaust passage of an engine, and exhaust gases were heated and allowed to flow therein so that a regenerating process for burning and eliminating accumulated particulates was carried out. After the regenerating process, each of the honeycomb filters was taken out, and examined as to whether or not any cracks occurred in the sealing material layer formed between the porous ceramic members on the end face on the exhaust gas inlet side.

The same evaluation tests were carried out while the amount of addition of the alumina layer was changed to 20 g/L and 60 g/L respectively. Here, the amount of application of the alumina layer was adjusted by altering the concentration of $\gamma$-$Al_2O_3$ in a dispersant solution prepared by dispersing powder of $\gamma$-$Al_2O_3$ in 1,3-butanediol and the number of immersing processes of the honeycomb filter into the dispersion solution.

Table 1 and Fig. 7 show the results of the evaluation tests.

Here, with respect to the results of Evaluation Test 1, Fig. 7 is a graph that shows the relationship between the rate (L/l) of the maximum width L of a crisscross portion of sealing material layer formed between porous ceramic members to the minimum width l of the sealing material layer and the depth of wind erosion at the crisscross portion of the sealing material layer, on the cross section of the ceramic block in each of the honeycomb filters according to Examples 1 to 15 and Comparative Examples 1 to 6.

Table 1

| | Filter shape | Circumferential sealing material layer (mm) | Chamfered face R (mm) | 1 (mm) (Note 1) | L (mm) (Note 2) | L/1 | Depth of wind erosion (mm) | Presence/absence of cracks <Classified by addition amount of alumina> | | |
|---|---|---|---|---|---|---|---|---|---|---|
| | | | | | | | | 1 g/L | 20 g/L | 60/g/L |
| Example 1 | Cylindrical | 1.0 | 0.0059 | 0.10 | 0.15 | 1.5 | 4.0 | Absent | Absent | Absent |
| Example 2 | Cylindrical | 1.0 | 0.013 | 0.10 | 0.16 | 1.6 | 3.2 | Absent | Absent | Absent |
| Example 3 | Cylindrical | 1.0 | 0.037 | 0.10 | 0.20 | 2.0 | 3.0 | Absent | Absent | Absent |
| Example 4 | Cylindrical | 1.0 | 0.067 | 0.10 | 0.25 | 2.5 | 3.3 | Absent | Absent | Absent |
| Example 5 | Cylindrical | 1.0 | 0.091 | 0.10 | 0.30 | 3.0 | 4.0 | Absent | Absent | Absent |
| Example 6 | Cylindrical | 1.0 | 0.059 | 1.00 | 1.50 | 1.5 | 3.0 | Absent | Absent | Absent |
| Example 7 | Cylindrical | 1.0 | 0.13 | 1.00 | 1.61 | 1.6 | 2.4 | Absent | Absent | Absent |
| Example 8 | Cylindrical | 1.0 | 0.37 | 1.00 | 2.01 | 2.0 | 2.0 | Absent | Absent | Absent |
| Example 9 | Cylindrical | 1.0 | 0.67 | 1.00 | 2.54 | 2.5 | 2.2 | Absent | Absent | Absent |
| Example 10 | Cylindrical | 1.0 | 0.91 | 1.00 | 2.99 | 3.0 | 3.0 | Absent | Absent | Absent |
| Example 11 | Cylindrical | 1.0 | 0.18 | 3.00 | 4.50 | 1.5 | 2.0 | Absent | Absent | Absent |
| Example 12 | Cylindrical | 1.0 | 0.39 | 3.00 | 4.83 | 1.6 | 1.3 | Absent | Absent | Absent |
| Example 13 | Cylindrical | 1.0 | 1.1 | 3.00 | 6.00 | 2.0 | 1.0 | Absent | Absent | Absent |
| Example 14 | Cylindrical | 1.0 | 2.01 | 3.00 | 7.63 | 2.5 | 1.5 | Absent | Absent | Absent |
| Example 15 | Cylindrical | 1.0 | 2.7 | 3.00 | 8.92 | 3.0 | 2.4 | Absent | Absent | Absent |
| Comparative Example 1 | Cylindrical | 1.0 | 0 | 0.10 | 0.14 | 1.4 | 10.0 | Present | Present | Present |
| Comparative Example 2 | Cylindrical | 1.0 | 0.118 | 0.10 | 0.35 | 3.5 | 7.0 | Present | Present | Present |
| Comparative Example 3 | Cylindrical | 1.0 | 0 | 1.00 | 1.41 | 1.4 | 6.0 | Present | Present | Present |
| Comparative Example 4 | Cylindrical | 1.0 | 1.18 | 1.00 | 3.51 | 3.5 | 5.5 | Present | Present | Present |
| Comparative Example 5 | Cylindrical | 1.0 | 0 | 3.00 | 4.24 | 1.4 | 5.0 | Present | Present | Present |
| Comparative Example 6 | Cylindrical | 1.0 | 3.53 | 3.00 | 10.50 | 3.5 | 4.2 | Present | Present | Present |

Note 1) 1: minimum width of sealing material layer

Note 2) L: maximum width of crisscross portion of sealing material layer

EP 1 495 790 A1

As shown in Table 1, in the honeycomb filters according to Examples 1 to 15, in which the maximum width L of the crisscross portion of the sealing material layer formed between porous ceramic members is made 1.5 to 3 times greater than the minimum width l of the sealing material layer, the depth of wind erosion on each crisscross portion of the sealing material layer is 4 mm or less so that the resulting depression is not so deep.

In contrast, in the honeycomb filters according to Comparative Examples 1 to 6, in which the maximum width L of the crisscross portion of the sealing material layer formed between porous ceramic members is less than 1. 5 times the minimum width l of the sealing material layer, or exceeds 3 times the minimum width l of the sealing material layer, the depth of wind erosion on each crisscross portion of the'sealing material layer exceeds 4 mm so that there is a large depression on the crisscross portion of the sealing material layer.

Moreover, in the honeycomb filters according to Examples 1 to 15, no cracks or the like were observed in the sealingmaterial layer formed between the porous ceramic members after the regenerating process.

In contrast, in the honeycomb filters according to Comparative Examples 1 to 6, cracks occurred on the end face on the exhaust gas inlet side, centered on the depression formed in the crisscross portion of the sealing material layer formed between the porous ceramic members.

(Example 16)

The same processes as Example 1 were carried out except that upon forming a ceramic block, instead of combining 5 (in longitudinal direction) × 5 (in lateral direction) porous ceramic members with one another so as to be cut into a cylindrical shape, 3 (in longitudinal direction) × 6 (in lateral direction) porous ceramic members 3 were combined with one another to form an elliptical columnar shape with a major diameter of 198 mm and a minor diameter of 99 so that a honeycomb filter having an elliptical columnar shape was manufactured.

The cross-sectional shape of the ceramic block for the honeycomb filter according to Example 16 was almost the same as that shown in Fig. 3(a). Here, on the end face of the ceramic block, the maximum width L of each crisscross portion of the sealing material layer formed between the porous ceramic members was 0.15 mm, the minimum width l of the sealing material layer was 0.10 mm, and the maximum width L of the crisscross portion was 1.5 times greater than the minimum width l of the sealing material layer.

(Examples 17 to 30, Comparative Examples 7 to 12)

The same processes as those of Example 16 were carried out except that the size of the chamfered face R formed on each of the corner portions of the circumference of the ceramics dried body was set to each of values shown in Table 2 so that a porous ceramic member was manufactured.

The same processes as those of Example 16 were carried out except that the above-mentioned porous ceramic member was used and that the thickness of the sealing material layer formed between the porous ceramic members was set to each of values as shown in Table 2 so that a honeycomb filter was manufactured.

The cross-sectional shape of the ceramic block for each of the honeycomb filters according to Examples 16 to 30 was almost the same as that shown in Fig. 3 (a) . Here, on the end face of the ceramic block, the maximum width L of each crisscross portion of the sealing material layer formed between the porous ceramic members, the minimum width l of the sealing material layer, and the rate of the maximum width L of the crisscross portion to the minimum width l of the sealing material layer are respectively shown in Table 2.

Evaluation Tests 1 and 2 were carried out on the honeycomb filters according to Examples 16 to 30 and Comparative Examples 7 to 12.

The results of the evaluation tests are shown in Table 2 and Fig. 8.

Here, Fig. 8 is a graph that shows the relationship between the rate (L/l) of the maximum width L of a crisscross portion of sealing material layer formed between porous ceramic members to the minimum width l of the sealing material layer and the depth of wind erosion at the crisscross portion'of the sealing material layer, on the cross section of the ceramic block in each of the honeycomb filters according to Examples 16 to 30 and Comparative Examples 7 to 12.

Table 2

| | Filter shape | Circumferential sealing material layer (mm) | Chamfered face R (mm) | l (mm) (Note 1) | L (mm) (Note 2) | L/l | Depth of wind erosion (mm) | Presence/absence of cracks <Classified by addition amount of alumina> | | |
|---|---|---|---|---|---|---|---|---|---|---|
| | | | | | | | | 1 g/L | 20 g/L | 60/g/L |
| Example 16 | Elliptical | 1.0 | 0.0059 | 0.10 | 0.15 | 1.5 | 4.0 | Absent | Absent | Absent |
| Example 17 | Elliptical | 1.0 | 0.013 | 0.10 | 0.16 | 1.6 | 3.5 | Absent | Absent | Absent |
| Example 18 | Elliptical | 1.0 | 0.037 | 0.10 | 0.20 | 2.0 | 3.2 | Absent | Absent | Absent |
| Example 19 | Elliptical | 1.0 | 0.067 | 0.10 | 0.25 | 2.5 | 3.5 | Absent | Absent | Absent |
| Example 20 | Elliptical | 1.0 | 0.091 | 0.10 | 0.30 | 3.0 | 4.0 | Absent | Absent | Absent |
| Example 21 | Elliptical | 1.0 | 0.059 | 1.00 | 1.50 | 1.5 | 3.1 | Absent | Absent | Absent |
| Example 22 | Elliptical | 1.0 | 0.13 | 1.00 | 1.61 | 1.6 | 2.6 | Absent | Absent | Absent |
| Example 23 | Elliptical | 1.0 | 0.37 | 1.00 | 2.01 | 2.0 | 2.1 | Absent | Absent | Absent |
| Example 24 | Elliptical | 1.0 | 0.67 | 1.00 | 2.54 | 2.5 | 2.3 | Absent | Absent | Absent |
| Example 25 | Elliptical | 1.0 | 0.91 | 1.00 | 2.99 | 3.0 | 3.2 | Absent | Absent | Absent |
| Example 26 | Elliptical | 1.0 | 0.18 | 3.00 | 4.50 | 1.5 | 2.2 | Absent | Absent | Absent |
| Example 27 | Elliptical | 1.0 | 0.39 | 3.00 | 4.83 | 1.6 | 1.4 | Absent | Absent | Absent |
| Example 28 | Elliptical | 1.0 | 1.1 | 3.00 | 6.00 | 2.0 | 1.2 | Absent | Absent | Absent |
| Example 29 | Elliptical | 1.0 | 2.01 | 3.00 | 7.63 | 2.5 | 1.7 | Absent | Absent | Absent |
| Example 30 | Elliptical | 1.0 | 2.7 | 3.00 | 8.92 | 3.0 | 2.5 | Absent | Absent | Absent |
| Comparative Example 7 | Elliptical | 1.0 | 0 | 0.10 | 0.14 | 1.4 | 10.2 | Present | Present | Present |
| Comparative Example 8 | Elliptical | 1.0 | 0.118 | 0.10 | 0.35 | 3.5 | 7.2 | Present | Present | Present |
| Comparative Example 9 | Elliptical | 1.0 | 0 | 1.00 | 1.41 | 1.4 | 6.2 | Present | Present | Present |
| Comparative Example 10 | Elliptical | 1.0 | 1.18 | 1.00 | 3.51 | 3.5 | 5.7 | Present | Present | Present |
| Comparative Example 11 | Elliptical | 1.0 | 0 | 3.00 | 4.24 | 1.4 | 5.2 | Present | Present | Present |
| Comparative Example 12 | Elliptical | 1.0 | 3.53 | 3.00 | 10.50 | 3.5 | 4.3 | Present | Present | Present |

Note 1) l: minimum width of sealing material layer

Note 2) L: maximum width of crisscross portion of sealing material layer

EP 1 495 790 A1

As shown in Table 2, in the honeycomb filters according to Examples 16 to 30, in which themaximumwidth L of the crisscross portion of the sealing material layer is made 1.5 to 3.0 times greater than the minimum width l of the sealing material layer, the depth of wind erosion on each crisscross portion of the sealing material layer is 4.0 mm or less so that the resulting depression is not so deep.

In contrast, in the honeycomb filters according to Comparative Examples 7 to 12, in which the maximum width L of the crisscross portion of the sealing material layer is less than 1.5 times the minimum width l of the sealing material layer, or exceeds 3 times the minimum width l of the sealing material layer, the depth of wind erosion on each crisscross portion of the sealing material layer is 4.3 mm or more so that there is a large depression on the crisscross portion of the sealing material layer.

Moreover, in the honeycomb filters according to Examples 16 to 30, no cracks or the like were observed in the sealing material layer formed between the porous ceramic members after the regenerating process.

In contrast, in the honeycomb filters according to Comparative Examples 7 to 12, cracks occurred on the end face on the exhaust gas inlet side, centered on the depression formed in the crisscross portion of the sealing material layer formed between the porous ceramic members.

(Comparative Examples 13 to 19)

The same processes as those of (1) of Example 1 were carried out except that the size of the chamfered face R formed on each of the corner portions of the circumference of the ceramics dried body was set to each of values shown in Table 3 so that a porous ceramic member was manufactured.

The same processes as those of (2) of Example 1 were carried out except that the above-mentioned porous ceramic member was used, that the thickness of the sealing material layer formed between the porous ceramic members was set to 1.0 mm and that no sealingmaterial paste layer was formed on the circumferential portion of the ceramic block so that a honeycomb filter was manufactured.

The cross-sectional shape of the ceramic block for each of the honeycomb filters according to the present Comparative Examples 13 to 19 was almost the same as that shown in Fig. 6(a). Here, on the end face of the ceramic block, the maximum width L of each crisscross portion of the sealingmaterial layer formed between the porous ceramic members, the minimum width l of the sealing material layer, and the rate of the maximum width L of the crisscross portion to the minimum width l of the sealing material layer are respectively shown in Table 3.

Evaluation Tests 1 and 2 described above were carried out on the honeycomb filters according to Comparative Examples 13 to 19.

The results of the evaluation tests are shown in Table 3 and Fig. 9.

Here, Fig. 9 is a graph that shows the relationship between the rate (L/l) of the maximum width L of a crisscross portion of sealing material layer formed between porous ceramic members to the minimum width l of the sealing material layer and the depth of wind erosion at the crisscross portion of the sealing material layer, in honeycomb filters according to Comparative Examples 13 to 19 with respect to the results of Evaluation Test 1.

Table 3

| | Filter shape | Circumferential sealing material layer (mm) | Chamfered face R (mm) | l (mm) (Note 1) | L (mm) (Note 2) | L/l | Depth of wind erosion (mm) | Presence/absence of cracks <Classified by addition amount of alumina> | | |
|---|---|---|---|---|---|---|---|---|---|---|
| | | | | | | | | 1 g/L | 20 g/L | 60/g/L |
| Comparative Example 13 | Columnar | No | 0 | 1.00 | 1.41 | 1.4 | 7.0 | Present | Present | Present |
| Comparative Example 14 | Columnar | No | 0.059 | 1.00 | 1.50 | 1.5 | 7.1 | Present | Present | Present |
| Comparative Example 15 | Columnar | No | 0.4 | 1.00 | 2.06 | 2.1 | 7.3 | Present | Present | Present |
| Comparative Example 16 | Columnar | No | 0.42 | 1.00 | 2.09 | 2.1 | 7.3 | Present | Present | Present |
| Comparative Example 17 | Columnar | No | 0.67 | 1.00 | 2.54 | 2.5 | 7.5 | Present | Present | Present |
| Comparative Example 18 | Columnar | No | 0.91 | 1.00 | 2.99 | 3.0 | 8.0 | Present | Present | Present |
| Comparative Example 19 | Columnar | No | 1.18 | 1.00 | 3.51 | 3.5 | 8.2 | Present | Present | Present |

Note 1) l: minimum width of sealing material layer

Note 2) L: maximum width of crisscross portion of sealing material layer

As shown in Table 3, in the honeycomb filters according to Comparative Examples 13 to 19 in which no sealing material paste layer is formed on the circumferential portion of the ceramic block, regardless of whether or not the maximum width L of the crisscross portion of the sealing material layer formed between the porous ceramic members is made 1.5 to 3 times greater than the minimum width l of the sealing material layer, the depth of wind erosion on each crisscross portion of the sealingmaterial layer is 7.0 mm or more so that a large depression is formed on the crisscross portion of the sealing material layer.

Moreover, in the honeycomb filters according to Comparative Examples 13 to 19, cracks occurred on the end face on the exhaust gas inlet side, centered on the depression formed in the crisscross portion of the sealing material layer formed between the porous ceramic members.

In other words, the honeycomb filter according to the invention disclosed in JP Kokai 2001-9 6117 is found to be a fragile honeycomb filter that is less likely to generate cracks and the like.

(Test Examples 1 to 21)

The same processes as those of (1) of Example 1 were carried out except that the size of the chamfered face R formed on each of the corner portions of the circumference of the ceramics dried body was set to each of values shown in Table 4 so that a porous ceramic member was manufactured.

The same processes as those of (2) of Example 1 were carried out except that the above-mentioned porous ceramic member was used, that the thickness of the sealing material layer formed between the porous ceramic members was set to each of values shown in Table 4 and that a sealing material paste layer was formed on the circumferential portion of the ceramic block, without cutting the circumference of the ceramic block, so that a rectangular columnar (rectangular parallelepiped) honeycomb filter with a square bottom face having 165 mm in each side was manufactured.

The cross-sectional shape of the ceramic block for each of the honeycomb filters according to the present Test Examples 1 to 21 was almost the same as that shown in Fig. 3(a) or Fig. 6(a). Here, on the end face of the ceramic block, the maximum width L of each crisscross portion of the sealing material layer formed between the porous ceramic members, the minimum width l of the sealing material layer, and the rate of the maximum width L of the crisscross portion to the minimum width 1 of the sealing material layer are respectively shown in Table 4.

Evaluation Tests 1 and 2 described above were carried out on the honeycomb filters according to Test Examples 1 to 21.

The results of the evaluation tests are shown in Table 4 and Fig. 10.

Here, Fig. 10, which relates to the results of Evaluation Test 1, is a graph that shows the relationship between the rate (L/l) of the maximum width L of a crisscross portion of sealing material layer formed between porous ceramic members to the minimum width l of the sealing material layer on the cross section of the ceramic block and the depth of wind erosion at the crisscross portion, in the honeycomb filters according to Test Examples 1 to 21.

Table 4

| | Filter shape | Circumferential sealing material layer (mm) | Chamfered face R (mm) | l (mm) (Note 1) | L (mm) (Note 2) | L/l | Depth of wind erosion (mm) | Presence/absence of cracks <Classified by addition amount of alumina> | | |
|---|---|---|---|---|---|---|---|---|---|---|
| | | | | | | | | 1 g/L | 20 g/L | 60/g/L |
| Test Example 1 | Rectangular columnar | 1.0 | 0.0059 | 0.10 | 0.15 | 1.5 | 5.3 | Absent | Absent | Present |
| Test Example 2 | Rectangular columnar | 1.0 | 0.013 | 0.10 | 0.16 | 1.6 | 4.2 | Absent | Absent | Absent |
| Test Example 3 | Rectangular columnar | 1.0 | 0.037 | 0.10 | 0.20 | 2.0 | 4.0 | Absent | Absent | Absent |
| Test Example 4 | Rectangular columnar | 1.0 | 0.067 | 0.10 | 0.25 | 2.5 | 4.3 | Absent | Absent | Absent |
| Test Example 5 | Rectangular columnar | 1.0 | 0.091 | 0.10 | 0.30 | 3.0 | 5.2 | Absent | Absent | Present |
| Test Example 6 | Rectangular columnar | 1.0 | 0.059 | 1.00 | 1.50 | 1.5 | 4.0 | Absent | Absent | Present |
| Test Example 7 | Rectangular columnar | 1.0 | 0.13 | 1.00 | 1.61 | 1.6 | 3.2 | Absent | Absent | Absent |
| Test Example 8 | Rectangular columnar | 1.0 | 0.37 | 1.00 | 2.01 | 2.0 | 2.5 | Absent | Absent | Absent |
| Test Example 9 | Rectangular columnar | 1.0 | 0.67 | 1.00 | 2.54 | 2.5 | 2.9 | Absent | Absent | Absent |
| Test Example 10 | Rectangular columnar | 1.0 | 0.91 | 1.00 | 2.99 | 3.0 | 4.0 | Absent | Absent | Present |
| Test Example 11 | Rectangular columnar | 1.0 | 0.18 | 3.00 | 4.50 | 1.5 | 2.7 | Absent | Absent | Present |
| Test Example 12 | Rectangular columnar | 1.0 | 0.39 | 3.00 | 4.83 | 1.6 | 1.7 | Absent | Absent | Absent |
| Test Example 13 | Rectangular columnar | 1.0 | 1.1 | 3.00 | 6.00 | 2.0 | 1.2 | Absent | Absent | Absent |
| Test Example 14 | Rectangular columnar | 1.0 | 2.01 | 3.00 | 7.63 | 2.5 | 2.0 | Absent | Absent | Absent |
| Test Example 15 | Rectangular columnar | 1.0 | 2.7 | 3.00 | 8.92 | 3.0 | 3.0 | Absent | Absent | Present |
| Test Example 16 | Rectangular columnar | 1.0 | 0 | 0.10 | 0.14 | 1.4 | 13.0 | Present | Present | Present |
| Test Example 17 | Rectangular columnar | 1.0 | 0.118 | 0.10 | 0.35 | 3.5 | 9.0 | Present | Present | Present |
| Test Example 18 | Rectangular columnar | 1.0 | 0 | 1.00 | 1.41 | 1.4 | 8.0 | Present | Present | Present |
| Test Example 19 | Rectangular columnar | 1.0 | 1.18 | 1.00 | 3.51 | 3.5 | 7.0 | Present | Present | Present |
| Test Example 20 | Rectangular columnar | 1.0 | 0 | 3.00 | 4.24 | 1.4 | 6.5 | Present | Present | Present |
| Test Example 21 | Rectangular columnar | 1.0 | 3.53 | 3.00 | 10.50 | 3.5 | 5.5 | Present | Present | Present |

Note 1) l: minimum width of sealing material layer

Note 2) L: maximum width of crisscross portion of sealing material layer

As shown in Table 4, in the honeycomb filters according to Test Examples 1 to 15, in which the maximum width L of the crisscross portion of the sealing material layer formed between the porous ceramic members is made 1.5 to 3.0 times greater than the minimum width l of the sealing material layer, the depth of wind erosion on each crisscross portion of the sealingmaterial layer is 5.3 mm or less so that the resulting depression is not so deep comparatively.

In contrast, in the honeycomb filters according to Test Examples 16 to 21, in which the maximum width L of the crisscross portion of the sealing material layer formed between the porous ceramic members is less than 1.5 times the minimum width l of the sealing material layer, or exceeds 3 times the minimum width l of the sealing material layer, the depth of wind erosion on each crisscross portion of the sealing material layer is 5.5 mm or more so that there is a large depression on the crisscross portion of the sealing material layer.

Moreover, in the honeycomb filters according to Test Examples 1 to 15, no cracks or the like were observed in the sealingmaterial layer formed between the porous ceramic members after the regenerating process when the amount of addition of the alumina layer is set to 1 g/L or 20 g/L. In the case of 60 g/L in the amount of addition of the alumina layer, in the honeycomb filters according to Test Examples 2 to 4, 7 to 9, and 12 to 14, in which the maximum width L of the crisscross portion of the sealing material layer formed between the porous ceramic members is in a range of 1.6 to 2.5 times the minimum width l of the sealing material layer, no cracks or the like occurred in the sealing material layer formed between the porous ceramic members after the regenerating process; however, in the honeycomb filters according to Test Examples 1, 5, 6, 10, 11 and 15, in which the maximum width L of the crisscross portion of the sealing material layer formed between the porous ceramic members is 1.5 or 3.0 times the minimum width 1 of the sealing material layer, cracks occurred on the end face on the exhaust gas inlet side, centered on the depression formed in the crisscross portion of the sealing material layer formed between the porous ceramic members.

In contrast, in the honeycomb filters according to Test Examples 16 to 21, regardless of the amount of addition of the alumina layer, cracks occurred on the end face on the exhaust-gas flow-in side, centered on the depression formed in the crisscross portion of the sealing material layer formed between the porous ceramic members.

INDUSTRIAL APPLICABILITY

With the above-mentioned arrangement, the honeycomb filter for purifying exhaust gases of the present invention is allowed to have superior durability, and is less likely to generate cracks and the like at a crisscross portion of sealing material layer, even when used together with a catalyst or used in an exhaust gas purifying device repeatedly for a long time.

**Claims**

1. A honeycomb filter for purifying exhaust gases which has a structure in which:

    a plurality of rectangular columnar porous ceramic members are combined with one another through a sealing material layer to constitute a ceramic block, each of the above-mentioned rectangular columnar porous ceramic member comprising a number of through holes that are placed in parallel with one another in the length direction with partition wall interposed therebetween;
    a sealing material layer is also formed on a circumference portion of said ceramic block; and
    said partition wall which separates said through holes functions as a filter for collecting particulates,

    wherein, on a cross section perpendicular to the length direction of said porous ceramic member of said ceramic block, the maximum width L (mm) of the crisscross portion of said sealing material layer is 1.5 to 3 times greater than the minimum width l (mm) of said sealing material layer.

2. The honeycomb filter for purifying exhaust gases according to claim 1,
    wherein the outer circumferential face in the length direction has a curved face.

3. The honeycomb filter for purifying exhaust gases according to claim 1 or 2,
    wherein on a cross section perpendicular to the length direction of the porous ceramic member of the ceramic block, the maximum width L (mm) of the crisscross portion of said sealing material layer is 1.5 to 3 times greater than the minimum width l (mm) of said sealing material layer, with respect to the crisscross portions of all the sealing material layer.

4. The honeycomb filter for purifying exhaust gases according to any one of claims 1 to 3,

wherein a catalyst supporting film is applied to the porous ceramic member.

5. The honeycomb filter for purifying exhaust gases according to any one of claims 1 to 4, wherein a catalyst is applied to the porous ceramic member .

6. The honeycomb filter for purifying exhaust gases according to any one of claims 1 to 5, wherein a catalyst supporting film is applied to the sealing material layer.

7. The honeycomb filter for purifying exhaust gases according to any one of claims 1 to 6, wherein a catalyst is applied to the sealing material layer.

Fig. 1

Fig. 2

(a)

20

A

22

23

A

21

(b)

20

21

23

22

Cross-sectional view taken along line A-A

Fig. 3

(a)

(b)

(c)

Fig. 4

(a)

142

112

l₄

R₃

112

l₄

202

(b)

143

113

143

l₅

α

L₅

203

(c)

144

114

204

l₆

L₆

204

204

Fig. 5

Fig. 6

(a)

(b)

(c)

Fig. 7

Fig. 8

Fig. 9

Fig. 10

EP 1 495 790 A1

## INTERNATIONAL SEARCH REPORT

International application No.

PCT/JP03/04478

A. CLASSIFICATION OF SUBJECT MATTER
Int.Cl⁷  B01D39/20, B01D46/00, F01N3/02

According to International Patent Classification (IPC) or to both national classification and IPC

B.  FIELDS SEARCHED

Minimum documentation searched (classification system followed by classification symbols)
Int.Cl⁷  B01D39/20, B01D46/00, F01N3/02

Documentation searched other than minimum documentation to the extent that such documents are included in the fields searched
Jitsuyo Shinan Koho        1926–1996    Toroku Jitsuyo Shinan Koho   1994–2003
Kokai Jitsuyo Shinan Koho   1971–2003    Jitsuyo Shinan Toroku Koho   1996–2003

Electronic data base consulted during the international search (name of data base and, where practicable, search terms used)
WPI

C.  DOCUMENTS CONSIDERED TO BE RELEVANT

| Category* | Citation of document, with indication, where appropriate, of the relevant passages | Relevant to claim No. |
|---|---|---|
| A | EP 1174399 A1  (NGK INSULATORS, LTD.), 23 January, 2002 (23.01.02), Full text & JP 2001-206780 A    & WO 01/53232 A1 & US 6395370 B | 1-7 |
| A | EP 1142619 A1  (IBIDEN CO., LTD.), 10 October, 2001 (10.10.01), Full text & JP 2001-162119 A    & WO 01/23069 A1 | 1-7 |
| A | JP 9-299731 A  (Matsushita Electric Industrial Co., Ltd.), 25 November, 1997 (25.11.97), Claims; page 5; Par. No. [0033] (Family: none) | 1-7 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

Date of the actual completion of the international search
17 June, 2003 (17.06.03)

Date of mailing of the international search report
01 July, 2003 (01.07.03)

Name and mailing address of the ISA/
Japanese Patent Office

Authorized officer

Facsimile No.

Telephone No.

Form PCT/ISA/210 (second sheet) (July 1998)

34